# EUROPEAN PATENT SPECIFICATION

(11) **EP 4 603 551 B1**
(45) Date of publication and mention of the grant of the patent: **30.09.2026**
(21) Application number: 24220030.1
(22) Date of filing: 16.12.2024
(51) Int. Cl.: C09D 11/50, C09D 11/38, C09D 11/322, C09D 11/101, C09D 11/36

(54) **INKJET INK AND METHOD FOR PRODUCING THE SAME, METHOD FOR FORMING CURED PRODUCT, AND METHOD FOR STIRRING INKJET INK**
TINTENSTRAHLTINTE UND VERFAHREN ZUR HERSTELLUNG DAVON, VERFAHREN ZUR HERSTELLUNG EINES GEHÄRTETEN PRODUKTS UND VERFAHREN ZUM RÜHREN DER TINTENSTRAHLTINTE
ENCRE POUR JET D'ENCRE ET SON PROCÉDÉ DE PRODUCTION, PROCÉDÉ DE FORMATION DE PRODUIT DURCI ET PROCÉDÉ D'AGITATION D'ENCRE POUR JET D'ENCRE

(30) Priority: 13.02.2024 JP 2024019463
(43) Date of publication of application: 20.08.2025
(73) Proprietor: KONICA MINOLTA, INC., Tokyo 100-7015 (JP)
(72) Inventor: Miyano, Masashi, Tokyo, 100-7015 (JP); Mori, Hisashi, Tokyo, 100-7015 (JP); Iguchi, Kazuki, Tokyo, 100-7015 (JP)
(74) Representative: Gille Hrabal Partnerschaftsgesellschaft mbB Patentanwälte

(56) References cited:
- EP-B1- 3 565 860
- EP-B1- 3 638 741
- WO-A1-2021/246181
- JP-A- 2019 210 337
- US-A1- 2021 139 730

## Description

### BACKGROUND OF THE INVENTION

### 1. Field of the Invention

The present invention relates to an inkjet ink, a method for producing the same, a method for forming a cured product, and a method for stirring an inkjet ink.

### 2. Description of Related Art

A phosphorescent pigment is known which absorb light of a predetermined wavelength, accumulates the energy of the light, and emits light with a wavelength different from that of the absorbed light for a long time even after the absorption of light is stopped (for example, Japanese Unexamined Patent Publication No. 2019-210337). A method is also known in which a liquid composition containing such a phosphorescent pigment is applied to a base material to produce a phosphorescent cured product (e.g., Japanese Unexamined Patent Publication No. H11-140368 and Japanese Unexamined Patent Publication No. 2013-135192). Additionally, EP3638741 might be cited as prior art.

It is expected that by making an ink containing a phosphorescent pigment into an ink with low viscosity that can be ejected using an inkjet method, it will be possible to produce cured products with high-resolution patterns. However, according to the findings of the present inventors, an ink containing a phosphorescent pigment does not have good storage stability. In addition, an ink containing a phosphorescent pigment is prone to clogging nozzles when ejected from an inkjet head, which can easily result in defective nozzle or unstable ejection during continuous ejection.

### SUMMARY OF THE INVENTION

The present invention relates to an inkjet ink containing a phosphorescent pigment. The present invention provides an inkjet ink that can produce a cured product having sufficiently high luminance, has high storage stability, is less likely to cause nozzle clogging, and is less likely to cause unstable ejection during continuous ejection. Another object of the present invention is to provide a method for producing the inkjet ink, a method for forming a cured product using the inkjet ink, and a method for stirring the inkjet ink.

In order to achieve at least one of the objects described above, an inkjet ink reflecting one aspect of the present invention contains a phosphorescent pigment, in which the content of the phosphorescent pigment is 10% by mass or more and 70% by mass or less based on the total weight of the inkjet ink, the viscosity of the inkjet ink at 25°C is 5 mPa·s to 200 mPa·s, and the total amount of Fe, Cr, Ni, Cu, and Zn contained in a supernatant liquid of the inkjet ink is 0.1 mg/kg to 1000 mg/kg.

### BRIEF DESCRIPTION OF DRAWING

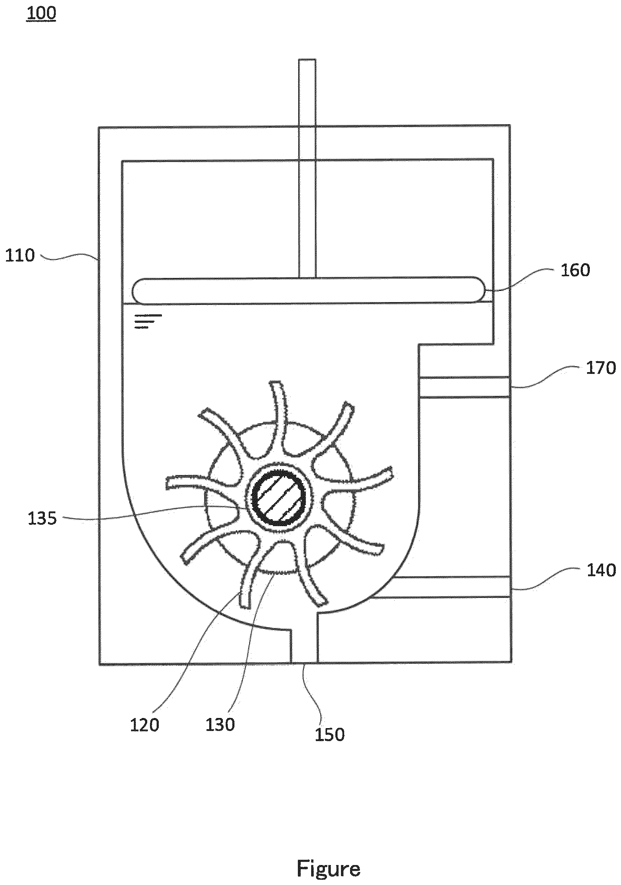

The advantageous and features provided by one or more embodiments of the invention will become more fully understood from the detailed description given hereinbelow and the appended drawing which are given by way of illustration only, and thus are not intended as a definition of the limits of the present invention:
The Figure is a schematic diagram illustrating a configuration of a stirring mechanism.

### DESCRIPTION OF THE PREFERRED EMBODIMENTS

Hereinafter, one or more embodiments of the present invention will be described with reference to the drawings. However, the scope of the invention is not limited to the disclosed embodiments.

### 1. Inkjet ink

One embodiment of the present invention relates to an inkjet ink containing a phosphorescent pigment. Hereinafter, each component will be described.

In the ink, the content of the phosphorescent pigment is 10% by mass or more and 70% by mass or less based on the total weight of the ink, and a viscosity of the ink at 25°C is 5 mPa·s or more and 200 mPa·s or less. By increasing the content of the phosphorescent pigment in the ink, the phosphorescent pigment in the cured product can be sufficiently excited, and the visibility of the cured product can be increased. On the other hand, by lowering the viscosity of the ink at 25°C, the ejectability from the inkjet head can be enhanced.

Note that the viscosity of the ink at 25°C can be a value obtained with a rheometer under the condition of a shear rate of 1000/sec. Stress-controlled rheometers PhysicaMCR series manufactured by Anton Paar Co., Ltd. can be used as rheometers. The cone plate may have a 75 mm radius and a cone angle of 1.0°.

Furthermore, the ink has a total amount of Fe, Cr, Ni, Cu, and Zn contained in a supernatant liquid of 0.1 mg/kg or more and 1000 mg/kg or less. The total amount of Fe, Cr, Ni, Cu, and Zn is more preferably 0.15 mg/kg or more and 700 mg/kg or less, and still more preferably 0. 2 mg/kg or more and 400 mg/kg or less.

When an ink containing a phosphorescent pigment is prepared, the phosphorescent pigment is first dispersed together with a liquid component to prepare a pigment dispersion. Thereafter, the pigment dispersion is stirred with the other components to adjust the viscosity. At this time, when a stirring chip or the like comes into vigorous contact with the metal container during the dispersion treatment in the production of the pigment dispersion or stirring in the adjustment of the viscosity, the container or the chip may be scraped off, with the result that a metal component may be eluted into the pigment dispersion or the ink. In particular, since the phosphorescent pigment has a relatively high hardness, when the stirring is performed at such a high intensity, the phosphorescent pigment also violently collides with the container or the chips. As a result, the amount of metal components eluted from the container and the chip tends to become large. Then, the eluted metal component is more likely to collide with the phosphorescent pigment in the ink having a low viscosity and is more likely to interact with the phosphorescent pigment to reduce the dispersibility or deteriorate the phosphorescent pigment. When the dispersibility is lowered, nozzles are clogged, and the ejectability from an inkjet head is lowered. In addition, in a case where the amount of the metal component is excessive, the ink becomes dark, and the luminance of the cured product is less likely to increase.

Further, the ink is stirred in the printer in order to prevent sedimentation of the phosphorescent pigment during standby. At this time, when the phosphorescent pigment comes into vigorous contact with a metal container, a stirring chip, or the like, elution of the metal component into the ink also occurs, and the ejectability from the inkjet head (particularly, the ejectability at the time of continuous ejection) deteriorates.

On the other hand, when the elution of the metal component into the ink is excessively suppressed, a decrease in dispersibility, a decrease in ejectability, and a decrease in ejectability during continuous ejection are also more likely to occur. In contrast, it is considered that when a certain amount of metal component is contained in the ink, particle growth of the phosphorescent pigment and precipitation of ink components during storage can be suppressed due to a mild interaction with the phosphorescent pigment. In addition, it is considered that since the metal component adsorbs the bubble nuclei of the phosphorescent pigment, bubbles on the surface of the phosphorescent pigment can be reduced, and the ejectability during continuous ejection can be stabilized.

From such a viewpoint, in the present embodiment, the total amount of Fe, Cr, Ni, Cu, and Zn contained in the supernatant liquid of the ink is set to be in the above-described range. In addition, Fe, Cr, and Ni are more likely to suppress the above-described particle growth of the phosphorescent pigment and precipitation of ink components and adsorb the bubble nuclei of the phosphorescent pigment. Therefore, the ink preferably contains Fe, Cr, and Ni in the above-described predetermined amounts.

The amount of these metallic components contained in the ink supernatant liquid is measured for the supernatant liquid after the ink is centrifuged for 10 minutes in a 15000 rpm to precipitate the solid components such as the phosphorescent pigments. The supernatant liquid is subjected to acid decomposition in a sealed microwave decomposition apparatus, and the decomposition liquid is appropriately diluted, followed by measurement using ICP-AES, ICP-MS, or the like according to the content and sensitivity of each element. For quantification, a calibration curve prepared using a standard substance is used. Note that the measurement method is not limited to the above as long as the absolute value of the content can be obtained. In the present embodiment, it is preferable that the ink ejected from the inkjet head satisfy the condition of the amount of the metal component described above. Note that for that purpose, the ink before being loaded into the printer needs to satisfy the condition of the amount of the metal component described above.

The amount of metal components in the ink can be reduced by preparing the pigment dispersion or the ink in a non-metallic container. Furthermore, when a pigment dispersion or an ink is prepared in a metal container, stirring may be performed with a stirring blade, a metal propeller, or the like that does not contact the container, without using a mode in which a stirring device such as a stirrer chip or the like contacts the container. The amount of the metal component in the ink prepared by these methods is measured, and when the amount of the metal component is small, an appropriate amount of the metal component may be added.

In addition, even when the ink is stirred in a printer, the elution of the metal component can be suppressed by preparing the pigment dispersion or the ink in a non-metallic container. In addition, when the ink is stirred in a metal container, the ink may be stirred by a stirring blade, a metal propeller, or the like which does not come into contact with the container, without using an aspect in which a stirring device such as a stirrer chip comes into contact with the container.

### 1-1. Phosphorescent Pigment

The phosphorescent pigment absorbs light having a predetermined wavelength and accumulates light energy. Then, even after the absorption of light is stopped, the accumulated energy of light is emitted for a long time as light having a wavelength different from that of the absorbed light. That is, the phosphorescent pigment is a pigment which emits phosphorescence. The composition may include only one type of phosphorescent pigment, or may include two or more types of phosphorescent pigments.

The phosphorescent pigment is not particularly limited as long as it has the above-described characteristics. Examples of the phosphorescent pigment include those obtained by subjecting a base crystal which is a metal compound to an activation treatment.

Examples of the base crystal include sulfides such as zinc sulfide, calcium sulfide, germanium sulfide, strontium sulfide, and yttrium sulfide. Examples of the base crystal further include metal oxides such as calcium oxide, strontium oxide, barium oxide, alumina, and cerium oxide. Examples of the base crystal further include aluminates such as calcium aluminate, strontium aluminate, and barium aluminate. Of these, strontium aluminate (SrAl₂O₄ Eu, Dy, refractive index of 1.67) is preferred.

Examples of the activator for activating the base crystal include europium, terbium, yttrium, zirconium, dysprosium, and barium. Of these, europium and dysprosium are preferred.

The peak wavelength of the excitation spectrum of the phosphorescent pigment is preferably preferably 300 nm or more and 400 nm or less. When peak wavelength of the excitation spectrum of the phosphorescent pigment is in the above range, the phosphorescent pigment can be sufficiently excited by sunlight, and the cured product is easily adapted to outdoor use.

The peak wavelength of the emission spectrum of the phosphorescent pigment may be, for example, 400 nm or more and 700 nm or less, and is preferably 450 nm or more and 600 nm or less from the viewpoint of further enhancing the visibility of the cured product.

The median diameter of the phosphorescent pigment in the ink is not particularly limited, and can be set to 0.2 µm or more and 20 µm or less. The median diameter of the phosphorescent pigment is preferably 0.3 µm or more and 10 µm or less, more preferably 0.5 µm or more and 5 µm or less, and still more preferably 0.5 µm or more and 3 µm or less. As the median diameter is larger, the phosphorescent pigment is more easily precipitated in the ink, and the effect of improving the redispersibility after the sedimentation by the silicone resin particles is remarkably observed. As the median diameter is smaller, the pigment is more likely to be redispersed after sedimentation, and the ejectability from an inkjet head becomes more satisfactory.

The particle diameter (D₅₀) at which the cumulative value in the volume-based particle size distribution is 50% may be used as the median diameter of the phosphorescent pigment.

The particle diameter (D₉₀) at which the cumulative value in the volume-based particle size distribution of the phosphorescent pigment in the ink is 90% may be 1.0 µm or more and 20 µm or less, preferably 1.5 µm or more and 10 µm or less, more preferably 2.0 µm or more and 8 µm or less. The smaller D₉₀, the easier it is to increase the adsorption amount of the silica particles to the phosphorescent pigment, and the easier it is to increase the redispersibility of the silica particles after sedimentation. Further, as the D₉₀ is larger, the precipitated phosphorescent pigments are less likely to be packed and are more likely to be redispersed. As D₉₀ is smaller, the ejectability from an inkjet head becomes more satisfactory, and even when aggregation occurs, members such as an inkjet head are less likely to be damaged.

The phosphorescent pigments preferably have a D₅₀/D₉₀ of 0.2 or more and 0.8 or less, more preferably 0.3 or more and 0.6 or less. The smaller the D₅₀/D₉₀, the broader the particle size distribution, making it possible to form a cured product in which the phosphorescent pigment is densely packed, and thus improving the weather resistance of the cured product.

The D₅₀ and D₉₀ of the phosphorescent pigments can be values measured using a particle diameter measuring apparatus, for example, LUMiSizer manufactured by LUM Japan Co., Ltd.

The phosphorescent pigment may be dispersed with a dispersant. The phosphorescent pigment may be dispersed with only one type of dispersant, or may be dispersed with two or more types of dispersants.

Examples of the dispersant include carboxylate esters having a hydroxy group, salts of long-chain polyaminoamides and high molecular weight acid esters, salts of high molecular weight polycarboxylic acids, salts of long-chain polyaminoamides and polar acid esters, high molecular weight unsaturated acid esters, polymer copolymers, modified polyurethanes, modified polyacrylates, polyether ester-type anionic surfactants, naphthalenesulfonic acid formalin condensate salts, aromatic sulfonic acid formalin condensate salts, polyoxyethylene alkyl phosphate esters, polyoxyethylene nonylphenyl ether, and stearylamine acetate. Examples of commercially available products of the pigment-dispersing agent include Solsperse series (manufactured by Avecia, "Solsperse" is a registered trademark of the company), PB series (manufactured by Ajinomoto Fine - Techno Co., Inc), and EFKA series (manufactured by Basf SE, "EFKA" is a registered trademark of the company).

The content of the dispersant is preferably 0.01% by mass or more and 20% by mass or less based on the total mass of the phosphorescent pigment.

The content of the phosphorescent pigment may be set according to the use of the phosphorescent pigment. For example, the content of the phosphorescent pigment can be 10% by mass or more and 70% by mass or less based on the total weight of the ink, is preferably 15% by mass or more and 60% by mass or less, and is more preferably 15% by mass or more and 55% by mass or less. The lower the content of the phosphorescent pigment is, the higher the redispersibility of the precipitated phosphorescent pigment is.

### 1-2. Silica Particles or Silicone Resin Particles

The ink may contain silica particles or silicone resin particles. The silica particles and the silicone resin particles can enhance the redispersibility of the precipitated phosphorescent pigment. When the redispersibility of the phosphorescent pigment is enhanced, the ejectability when the ink is continuously ejected from the inkjet head is easily stabilized.

### 1-2-1. Silica Particles

The silica particles preferably have an average particle diameter smaller than the median diameter of the phosphorescent pigment. Silica particles smaller than the phosphorescent pigment tend to adsorb to the surface of the phosphorescent pigment, and tend to inhibit packing and aggregation of the phosphorescent pigment. Thus, it is considered that the silica particles thus facilitate re-dispersion of the precipitated phosphorescent pigment. Furthermore, for the same reason, it is thought that when an ink containing an inorganic pigment is used, the silica particles suppress a decrease in the durability of a member such as an inkjet head, the ejection property of the ink, or the like.

The silica particles may be particles composed of silicon dioxide (SiO₂) or particles containing silicon dioxide as a main component and other substances. Alternatively, the silica particles may be core-shell type particles each including a core and a shell containing silicon dioxide. "Containing as a main component" means that silicon dioxide accounts for 50% by mass or more of the total mass of the particles. In light of enhancing redispersibility and circulation stability of the precipitated phosphorescent pigment, the silica particles are preferably particles formed only of silicon dioxide. The silica particles may be a natural product or a synthetic product, but a synthetic product is preferable since the average particle diameter and the particle size distribution can be easily adjusted.

The silica particles that are synthetic products may be silica particles produced by a dry method or silica particles produced by a wet method. Examples of the silica particles produced by a dry method include combustion silica particles produced by a combustion method and deflagration silica particles produced by a deflagration method. Examples of the silica particles produced by a wet method include precipitated silica particles produced by a sedimentation method, silica gel produced by a gel method, colloidal silica, and sol-gel silica. Among these, the combustion silica, the deflagration silica, and the sol-gel silica are preferable, and the sol-gel silica is more preferable, because the adsorptivity to the phosphorescent pigment is high.

The silica particles are subjected to hydrophobic treatment. The silica particles subjected to the hydrophobic treatment are easily wetted with the polymerizable compound and are easily dispersed in the ink. Therefore, the silica particles subjected to the hydrophobic treatment are easily adsorbed on the surface of the inorganic surface in the ink, and it is easy to enhance the redispersibility of the precipitated phosphorescent pigment and to suppress the deterioration of the durability, the ejection property, and the like of the members.

The method of the hydrophobic treatment is not particularly limited, and treatment with a silane coupling agent having a hydrophobic group (such as an alkyl group), a titanium coupling agent having a hydrophobic group (such as an alkyl group), polysiloxane, disilazane, silicone oil, a long-chain acid, or the like may be performed. The hydrophobic treatment can be performed with, for example, one of the following compounds: chlorosilanes such as tiltrichlorosilane, dimethyldichlorosilane, trimethylchlorosilane, phenyltrichlorosilane, diphenyldichlorosilane, t-butyldimethylchlorosilane and vinyltrichlorosilane; alkoxysilanes such as tetramethoxysilane, methyltrimethoxysilane, dimethyldimethoxysilane, phenyltrimethoxysilane, diphenyldimethoxysilane, o-methylphenyltrimethoxysilane, p-methylphenyltrimethoxysilane, n-butyltrimethoxysilane, i-butyltrimethoxysilane, hexyltrimethoxysilane, octyltrimethoxysilane, decyltrimethoxysilane, dodecyltrimethoxysilane, tetraethoxysilane, methyltriethoxysilane, dimethyldiethoxysilane, phenyltriethoxysilane, diphenyldiethoxysilane, i-butyltriethoxysilane, decyltriethoxysilane, vinyltriethoxysilane, γ-methacryloxypropyltrimethoxysilane, γ-glycidoxypropyltrimethoxysilane, γ-glycidoxypropylmethyldimethoxysilane, γ-mercaptopropyltrimethoxysilane, γ-chloropropyltrimethoxysilane, γ-aminopropyltrimethoxysilane, γ-aminopropyltriethoxysilane, γ-(2-aminoethyl) aminopropyltrimethoxysilane and γ-(2-aminoethyl) aminopropylmethyldimethoxysilane; polysiloxanes, including hexamethylcyclotrisiloxane, octamethylcyclotetrasiloxane, decamethylcyclopentasiloxane, hexamethyldisiloxane, octamethyltrisiloxane, and the like; disilazane, including hexamethyldisilazane, hexaethyldisilazane, hexapropyldisilazane, hexabutyldisilazane, hexapentyldisilazane, hexahexyldisilazane, hexacyclohexyldisilazane, hexaphenyldisilazane, divinyltetramethyldisilazane, and dimethyltetravinyldisilazane; silicone oils including dimethyl silicone oil, methyl hydrogen silicone oil, methylphenyl silicone oil, alkyl-modified silicone oil, chloroalkyl-modified silicone oil, chlorophenyl-modified silicone oil, fatty acid-modified silicone oil, polyether-modified silicone oil, alkoxy-modified silicone oil, carbinol-modified silicone oil, amino-modified silicone oil, fluorine-modified silicone oil, and terminal reactive silicone oil, and the like; and long-chain fatty acids such as undecylic acid, lauric acid, tridecylic acid, dodecylic acid, myristic acid, palmitic acid, pentadecylic acid, stearic acid, heptadecylic acid, arachic acid, montanic acid, oleic acid, linoleic acid, and arachidonic acid, and salts thereof.

Note that in the present specification, the hydrophobic treatment does not include a treatment in which a polymerizable group is contained. Examples of the polymerizable group include an epoxy group, a (meth)acryloyl group, and a vinyl group. A hydroxyl group or a silanol group does not react with a polymerizable compound, and therefore is not included in the polymerizable groups.

The silica particles subjected to the hydrophobic treatment preferably have a hydrophobicity of 30% or more and 80% or less, more preferably 50% or more and 75% or less.

Note that the hydrophobicity of the silica particles is measured with 0.2% by mass of the silica particles poured into 50 ml part of ion-exchanged water. Specifically, methanol is added dropwise from a burette while stirring with a magnetic stirrer, and the methanol mass fraction in the methanol-water mixed solution at the end point at which the entire amount of the silica particles has sunk is set.

The average particle diameter of the silica particles to the median diameter of the phosphorescent pigment is preferably 1/2 or less, more preferably 1/10 or less, still more preferably 1/20 or less, and particularly preferably 1/50 or less. The smaller the ratio of the average particle diameter of the silica particles to the median diameter of the phosphorescent pigment, the more easily the silica particles can be adsorbed on the surface of the phosphorescent pigment. In particular, when the average particle diameter of the silica particles is set to 1/20 or less to the median diameter of the phosphorescent pigment, the ratio of the specific surface area of the silica particles to the surface area of the phosphorescent pigment can be increased, and the silica particles can be more easily adsorbed on the surface of the phosphorescent pigment. The lower limit of the ratio of the average particle diameter of the silica particles to the median diameter of the phosphorescent pigment is not particularly limited, but is preferably 1/500 or more.

The average particle diameter of the silica particles is preferably 0.005 µm or more and 1.5 µm or less, more preferably 0.01 µm or more and 1.0 µm or less, still more preferably 0.05 µm or more and 0.5 µm or less. As the average particle diameter of the silica particles is smaller, the redispersibility of the precipitated phosphorescent pigment is enhanced. When the average particle diameter of the silica particles is increased to some extent, the specific surface area of the phosphorescent pigment to which the silica particles are attached is reduced, and it is possible to make it difficult for the nozzle surface to be damaged by the phosphorescent pigment.

A value published by the manufacturer may be used as the average particle diameter of the silica particles. The volume average particle diameter can also be measured by using a particle diameter measuring apparatus and a dynamic light scattering method. For example, a slurry containing silica particles is diluted with ion-exchanged water such that the content of the silica particles is 0.1% by mass, the diluted slurry is irradiated with laser light, and the intensity of scattered light scattered from the silica phosphorescent pigment is measured as a change with time in units of microseconds. The scattering intensity distribution caused by the detected silica particles is applied to a normal distribution, and the Z-average particle diameter of the silica particles is determined by a cumulant analysis method. As a particle diameter measuring device, for example, Zetasizer Nano ZS manufactured by Spectris Co., Ltd. can be used. The particle diameter measurement device is equipped with data analysis software, and the data analysis software can calculate the Z average particle diameter by automatically analyzing measurement data.

The silica particles preferably have a spherical shape. For example, the silica particle preferably has an aspect ratio, which is a ratio of a long diameter to a short diameter, of 1.0 or more and 1.5 or less, and more preferably 1.0 or more and 1.2 or less. The long diameter and the short diameter of a silica particle can be measured in the same manner as the long diameter and the short diameter of the phosphorescent pigment.

The content of the silica particles can be set to 0.01% by mass or more and 5% by mass or less based on the total mass of the ink. The content of the silica particles is preferably set to 0.01% by mass or more and 3% by mass or less, more preferably 0.01% by mass or more and 2% by mass or less, still more preferably 0.01% by mass or more and 1.5% by mass or less. When the content of the silica particles is 0.01% by mass or more, the redispersibility of the precipitated phosphorescent pigment is improved. When the content of the silica particles is 5% by mass or less, the deterioration in the ejection property due to silica particles that are not adsorbed to the phosphorescent pigment and damage to members such as the inkjet head are prevented.

Furthermore, the ratio of the content of the silica particles to the content of the phosphorescent pigment (content of silica particles (based on mass) / content of phosphorescent pigment (based on mass)) is preferably 0.0004 or more and 0.3 or less. The ratio of the content of the silica particles to the content of the phosphorescent pigment is more preferably 0.004 or more and 0.2 or less, still more preferably 0.01 or more and 0.1 or less.

### 1-2-2. Silicone Resin Particles

The average particle diameter of the silicone resin particles is preferably smaller than the median diameter of the phosphorescent pigment. Such silicone resin particles enter the phosphorescent pigment to enhance the fluidity of the phosphorescent pigment. Thus, it is considered that the precipitated phosphorescent pigment can be easily redispersed.

When the precipitated phosphorescent pigment cannot be redispersed, the concentration of the phosphorescent pigment in the inkjet ink to be ejected tends to fluctuate, and the viscosity of the inkjet ink fluctuates, resulting in unstable ejection. In addition, when the inkjet ink before ejection is circulated in the ink channel or the inkjet head, the circulation of the inkjet ink may be difficult to stabilize. The silicone resin particles make it easy to redisperse the phosphorescent pigment that has entered and settled between the phosphorescent pigments, and make these problems less likely to occur.

In addition, the phosphorescent pigment often has high hardness and is more likely to damage a nozzle surface of an inkjet head. In contrast, it is considered that the silicone resin particles enter the phosphorescent pigment to increase the fluidity of the phosphorescent pigment, making it difficult for the phosphorescent pigment to adhere to the nozzle surface, thus preventing the nozzle surface from being damaged by the phosphorescent pigment.

The silicone resin particles preferably have an average particle diameter of 0.2 µm or more and 7 µm or less, more preferably 0.3 µm or more and 5 µm or less, still more preferably 0.5 µm or more and 3 µm or less. As the average particle diameter of the silicone resin particles is smaller, the redispersibility of the precipitated phosphorescent pigment, the resistance to damage to the nozzle surface, the circulation stability, and the storage stability are enhanced by the effect described above. When the average particle diameter of the silicone resin particles is increased to some extent, the specific surface area of the phosphorescent pigment to which the silicone resin particles are attached can be reduced, and the nozzle surface can be made less likely to be damaged by the phosphorescent pigment.

The value published by the manufacturer can be used as the average particle diameter of the silicone resin particles. The volume average particle diameter can also be measured using a particle size distribution analyzer (LUMiSizer, manufactured by LUM Japan) utilizing the Stokes sedimentation method.

In addition, from the above viewpoint, the ratio of the median diameter of the phosphorescent pigment to the average particle diameter of the silicone resin particles (median diameter of phosphorescent pigment/average particle diameter of silicone resin particles) is preferably 1.2 or more and 15 or less. The ratio of the median diameter of the phosphorescent pigment to the average particle diameter of the silicone resin particles is more preferably 1.3 or more and 10 or less, still more preferably 1.5 or more and 6 or less.

The silicone resin constituting the silicone resin particles has a silsesquioxane structure ((RSiO_{1.5})ₙ , where R may be any organic group. The type of R in the silsesquioxane structure is not limited, and may be an alkyl group, a halogen-substituted alkyl group, or the like, and is preferably a methyl group.

The silicone resin particles may be particles formed solely of the silicone resin having a silsesquioxane structure, or particles having a blended structure or a core-shell structure formed of the silicone resin having a silsesquioxane structure and another resin. As the other resin, a vinyl resin or the like can be used, and an acrylic resin is preferable. In the case of having a core-shell structure, the shell preferably contains a silicone resin. From the viewpoint of enhancing the redispersibility and circulation stability of the precipitated phosphorescent pigment, the silicone resin particle is preferably a particle composed of a silicone resin alone.

Specific examples of the silicone resin particles include TOSPEARL2000B, TOSPEARL145, TOSPEARL130, and XC-99-A8808 manufactured by MOMENTIVE Co., Ltd.

The silicone resin particle preferably has a spherical shape. For example, the silicone resin particle has an aspect ratio, which is a ratio of a long diameter to a short diameter, of preferably 1.0 or more and 1.5 or less, more preferably 1.0 or more and 1.2 or less. The long diameter and the short diameter of the silicone resin particles can be measured in the same manner as the long diameter and the short diameter of the phosphorescent pigments.

The content of the silicone resin particles can be set to 0.01% by mass or more to 5% by mass or less based on the total weight of the ink, preferably set to 0.1% by mass or more to 3% by mass ore less, and more preferably set to 0.3% by mass or more to 2% by mass or less. When the content of the silicone resin particles is 0.01% by mass or more, the redispersibility of the precipitated phosphorescent pigments is enhanced. When the content of the silicone resin particles is 5% by mass or less, a reduction in circulation stability due to the silicone resin particles that have not entered the phosphorescent pigment is prevented.

In addition, the ratio of the content of the silicone resin particles to the content of the phosphorescent pigment (content of silicone resin particles (based on mass) / content of phosphorescent pigment (based on mass)) is preferably 0.0004 or more and 0.3 or less. The ratio of the content of the silicone resin particles to the content of the phosphorescent pigment is more preferably 0.004 or more and 0.2 or less, still more preferably 0.01 or more and 0.1 or less.

### 1-3. Liquid Component

The ink according to the present embodiment may be a polymerizable ink, a solvent-based ink, an oil ink, or the like. In the ink, the content of water is preferably 0% by mass or more and less than 50% by mass based on the total mass of the ink. In the ink, the content of water based on the total mass of the ink is more preferably 0% by mass or more and less than 30% by mass, even more preferably 0% by mass or more and less than 10% by mass, even more preferably 0% by mass or more and less than 5% by mass, and it is particularly preferable that the ink is substantially free of water. Note that the term "substantially free of water" means that the content of water is 0% by mass or more and less than 1% by mass based on the total mass of the ink.

In the ink in which the amount of water in the liquid component is small (or no water is contained), since the amount of the polar component is small, the silicone resin particles are easily wetted and easily enter the phosphorescent pigment. Thus, it is considered that the above-described effects such as the improvement of the redispersibility of the precipitated phosphorescent pigment, the improvement of the abrasion resistance of the nozzle surface, and the improvement of the circulation stability and the storage stability are effectively exhibited.

The polymerizable ink may be an ink in which the content of a polymerizable compound that is polymerized by irradiation with active energy rays based on the total mass of the ink is 50% by mass or more. The solvent-based ink may be an ink in which the content of the organic solvent based on the total mass of the ink is 50% by mass or more. The polymerizable ink may be an ink in which the content of the polymerizable compound based on the total mass of the ink is 50% by mass or more. Note that the polymerizable ink may contain a photopolymerization initiator for initiating polymerization and crosslinking of the polymerizable compound. The oil ink may be an ink having an oil content of 50% by mass or more based on the total mass of the ink.

### 1-3. Liquid Component

The ink may be water-based ink containing an organic solvent as a liquid component or solvent-based ink. Alternatively, the ink may be an oil ink containing oil. The ink may be a polymerizable ink that contains a polymerizable compound as a liquid component and is cured by irradiation with active rays. Of these, a polymerizable ink is preferable from the viewpoint of enhancing weather resistance and the like when a cured product is used outdoors.

The solvent-based ink may be an ink in which the content of the organic solvent based on the total mass of the ink is 50% by mass or more. The oil ink may be an ink having an oil content of 50% by mass or more based on the total mass of the ink. The polymerizable ink may be an ink in which the content of the polymerizable compound based on the total mass of the ink is 50% by mass or more. The polymerizable ink may be an ink in which the content of a polymerizable compound that is polymerized by irradiation with active energy rays based on the total mass of the ink is 50% by mass or more. Note that the polymerizable ink may contain a photopolymerization initiator for initiating polymerization and crosslinking of the polymerizable compound.

### 1-3-1. Organic Solvent

Examples of organic solvents include aliphatic alcohols, aromatic alcohols, diols, triols, glycol ethers, poly (glycol) ethers, lactams, formamides, acetamides, long chain alcohols, ethylene glycol, propylene glycol, diethylene glycol, triethylene glycol, glycerin, dipropylene glycol, glycol butyl ether, polyethylene glycol, polypropylene glycol, amides, amines, ethers, carboxylic acids, esters, organosulfides, organosulfoxides, sulfones, alcohol derivatives, carbitol, butyl carbitol, cellosolve, ether derivatives, amino alcohols and ketones, and the like.

Among these, glycol ethers and fatty acid esters are preferable from the viewpoint of enhancing the dispersibility of the phosphorescent pigment.

Examples of the glycol ether include diethylene glycol diethyl ether, diethylene glycol methyl ethyl ether, diethylene glycol dibutyl ether, dipropylene glycol dimethyl ether, tetraethylene glycol dimethyl ether, other polyethylene glycols, and other polypropylene glycols.

Examples of the fatty acid ester include methyl oleate, methyl caprylate, methyl caprate, methyl laurate, methyl myristate, methyl palmitate, methyl stearate, methyl oleate, tallow fatty acid methyl, rice bran fatty acid methyl, rapeseed fatty acid methyl, soybean fatty acid methyl, n-butyl palmitate, n-butyl stearate, rapeseed fatty acid n-butyl, soybean fatty acid n-butyl, rice bran fatty acid i-butyl, rapeseed fatty acid i-butyl, octyl palmitate, octyl oleate, rapeseed fatty acid octyl, vegetable fatty acid octyl, isopropyl myristate, and isopropyl palmitate.

The content of the organic solvent is preferably 50% by mass or more and 97% by mass or less, more preferably 60% by mass or more and 95 % by mass or less based on the total mass of the solvent-based ink .

### 1-3-2. Oil

Examples of oils include aliphatic hydrocarbons including octane, nonane, decane, dodecane, isooctane, isodecane, and the like. Examples of oils further include alicyclic hydrocarbons including cyclohexane, cyclooctane, cyclodecane, and the like. Examples of oils further include higher alcohols including octanol, decanol, octadecenol, and the like.

The oil ink may further contain a higher fatty acid ester, a silicone oil, and the like as a solvent, and may further contain a vegetable oil. Examples of the vegetable oil include semi-drying oils such as soybean oil, cottonseed oil, rapeseed oil, sesame oil and corn oil; non-drying oils such as olive oil, peanut oil and camellia oil; and drying oils such as linseed oil and safflower oil.

The content of the oil is preferably 50% by mass or more and 97% by mass or less, and more preferably 60% by mass or more and 95% by mass or less based on the total mass of the oil ink.

### 1-3-3. Polymerizable Compound and Photopolymerization Initiator

### 1-3-3-1. Polymerizable Compound

The polymerizable compound may be a radically polymerizable compound or a cationically polymerizable compound. The polymerizable compound may be used in combination of a radically polymerizable compound and a cationically polymerizable compound.

The radically polymerizable compound is a compound (a monomer, an oligomer, a polymer, or a mixture thereof) having an ethylenically unsaturated bond capable of radical polymerization.

Examples of the compound having an ethylenically unsaturated bond capable of radical polymerization include unsaturated carboxylic acid and a salt thereof, an unsaturated carboxylic acid ester compound, an unsaturated carboxylic acid urethane compound, an unsaturated carboxylic acid amide compound and an anhydride thereof, acrylonitrile, styrene, unsaturated polyester, unsaturated polyether, unsaturated polyamide, and unsaturated urethane. Examples of the unsaturated carboxylic acid include (meth)acrylic acid, itaconic acid, crotonic acid, isocrotonic acid, and maleic acid.

Among these, the radically polymerizable compound is preferably an unsaturated carboxylic acid ester compound, and more preferably a (meth)acrylate. The (meth)acrylate may be not only a monomer described below, but also an oligomer, a mixture of a monomer and an oligomer, a modified product, an oligomer having a polymerizable functional group, or the like.

Examples of the monofunctional (meth)acrylate include isoamyl (meth)acrylate, stearyl (meth)acrylate, isobornyl (meth)acrylate, lauryl (meth)acrylate, octyl (meth)acrylate, decyl (meth)acrylate, isomyristyl (meth)acrylate, isostearyl (meth)acrylate, 2-phenoxyethyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, o-phenylphenoxyethyl (meth)acrylate, m-phenoxybenzyl (meth)acrylate, cyclic trimethylolpropane formal (meth)acrylate, ethoxylated phenoxy (meth)acrylate, alkoxylated phenol (meth)acrylate, tetrahydrofurfuryl (meth)acrylate, isobomyl (meth)acrylate, 2-hydroxyethyl (meth)acrylate, 2-hydroxypropyl (meth)acrylate, 2-hydroxy-3-phenoxypropyl (meth)acrylate, 2-hydroxy-o-phenylphenolpropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid and t-butylcyclohexyl (meth)acrylate.

Examples of the polyfunctional (meth)acrylate include the following: bifunctional (meth)acrylates including triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecanedimethanol diacrylate, dimethylol-tricyclodecane di(meth)acrylate, bisphenol A-type di(meth)acrylate, hydroxypivalic acid-neopentyl glycol di(meth)acrylate, bisphenol fluorene diacrylate (A-BPEF), bisphenol A-type 10EO modified diacrylate, bisphenol A-type diacrylate, bisphenol A-type PO modified diacrylate, bisphenol A-type EO modified diacrylate, polytetramethylene glycol di(meth)acrylate, polyethylene glycol diacrylate, dipropylene glycol diacrylate, and tripropylene glycol diacrylate; and trifunctional or higher (meth)acrylates including trimethylolpropane tri(meth)acrylate, pentaerythritol tri(meth)acrylate, pentaerythritol tetra(meth)acrylate, dipentaerythritol hexa (meth)acrylate, ditrimethylolpropane tetra(meth)acrylate, glycerolpropoxy tri(meth)acrylate, and pentaerythritol ethoxy tetra(meth)acrylate.

The (meth)acrylate may be a modified product. Examples of the modified (meth)acrylate include ethylene oxide-modified (meth)acrylates such as ethylene oxide-modified trimethylolpropane tri(meth)acrylate and ethylene oxide-modified pentaerythritol tetraacrylate, caprolactone-modified (meth)acrylates such as caprolactone-modified trimethylolpropane tri(meth)acrylate, and caprolactam-modified (meth)acrylates such as caprolactam-modified dipentaerythritol hexa (meth)acrylate.

The (meth)acrylate may be a polymerizable oligomer. Examples of the (meth)acrylate that is a polymerizable oligomer include epoxy (meth)acrylate oligomers, aliphatic urethane (meth)acrylate oligomers, aromatic urethane (meth)acrylate oligomers, polyester (meth)acrylate oligomers, and linear (meth)acryl oligomers.

Examples of the cationically polymerizable compound include an epoxy compound, a vinyl ether compound, and an oxetane compound.

Examples of the epoxy compound include the following: alicyclic epoxy resins including 3,4-epoxycyclohexylmethyl-3',4'-epoxycyclohexanecarboxylate, bis(3,4-epoxycyclohexylmethyl)adipate, vinylcyclohexene monoepoxide, ε-caprolactone-modified 3,4-epoxycyclohexylmethyl 3',4'-epoxycyclohexanecarboxylate, 1-methyl-4-(2-methyloxiranyl)-7-oxabicyclo[4,1,0]heptane, 2-(3,4-epoxycyclohexyl-5,5-spiro-3,4-epoxy)cyclohexanone-meta-dioxane and bis(2,3-epoxycyclopentyl)ether; aliphatic epoxy compounds including diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propylene glycol, polyglycidyl ethers of polyether polyols obtained by adding one or more alkylene oxides (such as ethylene oxide and propylene oxide) to aliphatic polyhydric alcohols such as ethylene glycol, propylene glycol, and glycerin; and aromatic epoxy compounds including di- or polyglycidyl ethers of bisphenol A or its alkylene oxide adducts, di- or polyglycidyl ethers of hydrogenated bisphenol A or its alkylene oxide adducts, and novolac type epoxy resins.

Examples of the vinyl ether compound include the following: monovinyl ether compounds including ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, octadecyl vinyl ether and the like; and di-or trivinyl ether compounds including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, trimethylolpropane trivinyl ether, and the like.

Examples of the oxetane compound include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-phenyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxyethyl-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 1, 4 bis {[(3-ethyl-3-oxetanyl) methoxy] methyl) benzene, 3-ethyl-3-(2-ethylhexyloxymethyl) oxetane, and di[1-ethyl (3-oxetanyl)] methyl ether.

The polymerizable compound preferably includes a monofunctional compound having an aromatic ring in the molecule thereof. The polymerizable compound having an aromatic ring in the molecule can enhance the dispersion stability of the phosphorescent pigment in the low-viscosity ink having a metal amount in the above-described range, can enhance the storage stability of the ink, and can make clogging of a nozzle less likely to occur. In addition, the monofunctional compound is less likely to increase the viscosity of the ink.

The content of the monofunctional polymerizable compound having an aromatic ring is preferably 20% by mass or more and 80% by mass or less, more preferably 25% by mass or more and 60% by mass or less based on the total mass of the ink.

Examples of the monofunctional polymerizable compound having an aromatic ring include phenol 4EO modified acrylate, 2-phenoxyethyl acrylate, m-phenoxybenzyl acrylate, EO modified o-phenylphenol acrylate, benzyl acrylate, cumyl phenoxyethyl acrylate, 2-hydroxy-3-phenoxypropyl acrylate, and 2-hydroxy-o-phenylphenol propyl acrylate. Among these, phenol 4EO modified acrylate and 2-phenoxyethyl acrylate are preferable from the viewpoint of further enhancing the storage stability of the ink.

The content of the polymerizable compound is preferably 50% by mass or more and 97% by mass or less, more preferably 60% by mass or more and 95% by mass or less based on the total mass of the polymerizable ink.

### 1-3-3-2. Photopolymerization Initiator

The photopolymerization initiator may be a radical initiator when the polymerizable ink contains a radical polymerizable compound, and may be a cationic initiator (photoacid generator) when the polymerizable ink contains a cationic polymerizable compound. When polymerization is initiated by irradiation with an electron beam, the polymerizable ink does not have to contain a photopolymerization initiator.

Examples of the radical polymerization initiator include hydrogen abstraction type photopolymerization initiators and intramolecular cleavage type photopolymerization initiators. Examples of the hydrogen abstraction type photopolymerization initiators include intramolecular hydrogen abstraction type photopolymerization initiators, intermolecular hydrogen abstraction type photopolymerization initiators, and the like.

The intramolecular hydrogen abstraction type photopolymerization initiator is a photopolymerization initiator which is excited by irradiation with an active energy ray and generates a hydrogen abstraction reaction in a molecule to generate a radical. Examples of the intramolecular hydrogen abstraction type photopolymerization initiators include methyl benzoylformate-based photopolymerization initiators such as methyl phenylglyoxylate, and oxyphenyl-based photopolymerization initiators such as a mixture of oxyphenylacetic acid-2-[2-oxo-2-phenylacetoxy-ethoxy] ethyl ester and oxyphenylacetic acid 2-[2-hydroxy-ethoxy] ethyl ester. Among these, compounds having a glyoxylic acid structure, such as methyl benzoylformate-based photopolymerization initiators, are preferred because they are less likely to cause abstraction of hydrogen from the molecular chain of the polymerizable compound during polymerization.

Examples of commercially available products of the intramolecular hydrogen abstraction type photopolymerization initiator include Omnirad MBF and Omnirad 754 (both are manufactured by IGM Resins, "Omnirad" is a registered trademark of the company).

The intermolecular hydrogen abstraction type photopolymerization initiator is a photopolymerization initiator which is excited by irradiation with active energy rays such as ultraviolet rays and abstracts hydrogen from other molecules to generate radicals. Examples of the intramolecular hydrogen abstraction type photopolymerization initiator include benzophenone-based initiators including benzophenone, o-benzoylmethylbenzoate, 4-phenylbenzophenone, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone, and 3,3'-dimethyl-4-methoxybenzophenone, and thioxanthone-based initiators such as 2-isopropylthioxanthone, 2,4-dimethylthioxanthone, 2,4-diethylthioxanthone, and 2,4-dichlorothioxanthone.

Examples of commercially available products of the intermolecular hydrogen abstraction type photopolymerization initiator include Omnirad 500 (manufactured by IGM Resins), Speedcure ITX (manufactured by Sartomer, "Speedcure" is a registered trademark of Arkema France) and the like.

Examples of the intramolecular cleavage type photopolymerization initiator include the following: acetophenone-based initiators such as 2-hydroxy-2-methyl-1-phenylpropan-1-one, benzyl dimethyl ketal, 4-(2-hydroxyethoxy) phenyl-(2-hydroxy-2-propyl) ketone, 1-hydroxycyclohexyl-phenyl ketone, 2-methyl-2-morpholino (4-methylthiophenyl) propan-1-one, and 2-benzyl-2-dimethylamino-1-(4-morpholinophenyl)-butanone; benzoin-based initiators such as benzoin, benzoin methyl ether, and benzoin isopropyl ether; and acylphosphine oxide-based initiators such as 2,4,6-trimethylbenzoin diphenylphosphine oxides, bis (2,4,6-trimethylbenzoin) phenylphosphine oxides.

Examples of commercially available products of the intramolecular cleavage type photopolymerization initiator include Omnirad 127, Omnirad 184, Omnirad 651, Omnirad 2959, Omnirad 819, and Esacure One.

The photopolymerization initiator preferably includes a phenylglyoxylic acid ester-based initiator. The phenylglyoxylic acid ester-based initiator can increase the luminance of a cured film formed from an ink having a metal amount within the range of the present invention and a low viscosity. Examples of the phenylglyoxylic acid ester-based initiator include phenylglyoxylic acid methyl ester (Omnirad MBF, manufactured by IGM RESINS BV ("Omnirad" is a registered trademark of the company)), Omnirad 754, and the like.

The content of the photopolymerization initiator is preferably 3% by mass or more and 20% by mass or less based on the total mass of the polymerizable compound. The content of the photopolymerization initiator is more preferably 3% by mass or more and 15% by mass or less, still more preferably 3% by mass or more and 10% by mass or less, particularly preferably 5% by mass or more and 10% by mass or less, based on the total mass of the polymerizable compounds. When the content is 3% by mass or more, the curability and adhesion of the polymerizable ink can be further enhanced.

### 1-4. Other Components

The ink may further contain other components, such as an organic pigment, a dye, a surfactant, a fluorescent brightener, a gelling agent, and a polymerization inhibitor.

Examples of the organic pigments include red pigments, yellow pigments, blue pigments, and white pigments, which are used in inks for image formation. As these pigments, known pigments can be used. Examples of the dye include a red dye, a yellow dye, and a blue dye, which are used in an ink for image formation. As these dyes, known dyes can be used.

Examples of the surfactant include anionic surfactants such as dialkylsulfosuccinates, alkylnaphthalenesulfonates, and fatty acid salts. Examples of the surfactant further include nonionic surfactants such as polyoxyethylene alkyl ethers, polyoxyethylene alkyl allyl ethers, acetylene glycols and polyoxyethylene-polyoxypropylene block copolymers. Examples of the surfactant further include cationic surfactants such as alkylamine salts and quaternary ammonium salts, and silicone-based and fluorine-based surfactants.

The content of the surfactant is not particularly limited, but can be, for example, 0.001% by mass or more and less than 1.0% by mass based on the total mass of the ink.

The gelling agent is a compound that turns the ink into a gel state at room temperature (25°C) and into a sol state when heated (for example, 80°C). For example, the gelling agent is preferably a compound that dissolves in liquid components (such as a polymerizable compound and an organic solvent) contained in the ink at a temperature higher than the gelation temperature of the ink and crystallizes at a temperature equal to or lower than the gelation temperature of the ink. The gelation temperature means a temperature at which, when an ink solated or liquefied by heating is cooled, the ink undergoes a phase transition from sol to gel and the viscosity of the ink suddenly changes. Specifically, when the solated or liquefied ink is cooled while the viscosity thereof is measured by a rheometer (for example, MCR300 manufactured by Anton Paar), the temperature at which the viscosity rapidly increases can be defined as the gelation temperature of the ink.

Examples of the gelling agent include ketone wax, ester wax, petroleum wax, vegetable wax, animal wax, mineral wax, hardened castor oil, modified wax, higher fatty acid, higher alcohol, hydroxystearic acid, fatty acid amide including n-substituted fatty acid amide and special fatty acid amide, higher amine, sucrose fatty acid ester, synthetic wax, dibenzylidene sorbitol, dimer acid and dimer diol.

The content of the gelling agent is preferably 1.0% by mass or more and 10.0% by mass or less, more preferably 2.0% by mass or more and 7.5% by mass or less, and still more preferably 2.0% by mass or more and 3.5% by mass or less, based on the total mass of the ink.

Examples of the polymerization inhibitor include n-oxyl-based polymerization inhibitors, phenol-based polymerization inhibitors, quinone-based polymerization inhibitors, amine-based polymerization inhibitors, and copper dithiocarbamate-based polymerization inhibitors. Only one type of the polymerization inhibitor may be contained in the ink, or two or more types thereof may be contained in combination.

Examples of the n-oxyl-based polymerization inhibitor include 4-hydroxy-2, 2,6,6-tetramethylpiperidine-n-oxyl (TEMPO), 4-hydroxy-2,2,6,6-tetramethyl-piperidine-n-oxyl, 4-oxo-2,2,6,6-tetramethyl-piperidine-n-oxyl, 4-methoxy-2,2,6,6-tetramethyl-piperidine-n-oxyl, 4-acetoxy-2,2,6,6-tetramethyl-piperidine-n-oxyl, and the like. Examples of commercially available products of the n-oxyl-based polymerization inhibitor include Irgastab UV10 (manufactured by Basf SE ("Irgastab" is a registered trade mark of the company)).

Examples of the phenol-based polymerization inhibitor include 2,6-di-tert-butylphenol, 2,4-di-tert-butylphenol, 2-tert-butyl 4,6-dimethylphenol, 2,6-di-tert-butyl-4-methylphenol, 2,4,6-tri-tert-butylphenol, 2,6-di-t-butyl-p-cresol (butylated hydroxytoluene BHT), 4-methoxyphenol, and 2-methoxy-4-methylphenol.

Examples of the quinone-based polymerization inhibitor include hydrochinone, methoxyhydroquinone, benzoquinone, 1,4-naphthoquinone, p-tert-butylcatechol and the like.

Examples of the amine-based polymerization inhibitor include alkylated diphenylamine, N,N'-diphenyl-p-phenylenediamine, and phenothiazine.

Examples of the copper dithiocarbamate-based polymerization inhibitor include copper dimethyldithiocarbamate, copper diethyldithiocarbamate, copper dibutyldithiocarbamate and the like.

The content of the polymerization inhibitor is not particularly limited, but can be, for example, 0.01% by mass or more and 0.5% by mass or less based on the total mass of the ink.

### 1-5. Physical Properties of Ink

The ink is preferably capable of forming a cured film having a volume resistivity of 10¹¹ Ω· m or more. The specific surface resistance of the cured film can be measured using Hiresta UX (manufactured by Nitto Seiko Analytech Co., Ltd., MCP HT800).

### 1-6. Method for Preparing Ink

The ink can be prepared by mixing the above-described components. At this time, a pigment dispersion containing the phosphorescent pigment may be prepared first, and the remaining components may be added to the obtained pigment dispersion later. In order to increase the solubility of the dispersant and the like, it is preferable to mix the phosphorescent pigment, the dispersant, and the like while heating to prepare the dispersion liquid. When the pigment dispersion is prepared, silica particles or silicone resin particles may be dispersed at the same time. It is preferable that the silica particles or the silicone resin particles are added in advance at the time of dispersion, from the viewpoints of sufficiently wetting the ink and allowing the particles to enter the phosphorescent pigment.

The preparation of the pigment dispersion is preferably performed in a non-metallic container (e.g., a container made of plastic such as polypropylene) in order to prevent an increase in the amount of metal components in the ink. In addition, when the preparation is performed in a metal container (for example, a stainless steel container such as SUS304), the preparation is preferably performed in such a manner that a stirring device does not come into contact with the container. For example, a homogenizer, a ceramic stirring grinding mixer, a wet pulverizer, or the like can be used. When a metal container is used, the dispersion treatment is preferably performed without adding metal beads or stirrer chips. On the other hand, when a non-metallic container is used, a dispersion treatment may be performed by adding metallic beads or stirrer chips. Both when a metal container is used and when a non-metallic container is used, it is preferable to perform the dispersion treatment with a stirring blade, a metal propeller, or the like without bringing a stirring device into contact with the container.

Note that the preparation of the pigment dispersion is preferably performed with a ceramic stirring grinding mixer. The stirring grinding mixer can disperse the phosphorescent pigment while reducing its particle diameter. As a result, the stirring grinding mixer can reduce the proportion of coarse particles in the pigment dispersion and the ink, and can improve the ejectability from the inkjet head (in particular, the ejectability during continuous ejection).

The ink is preferably prepared in a non-metallic container (e.g., a container made of plastic such as polypropylene) in order to prevent an increase in the amount of metal components in the ink. In addition, when the preparation is performed in a metal container (for example, a stainless steel container such as SUS304), the preparation is preferably performed in such a manner that a stirring device does not come into contact with the container. For example, a homogenizer, a ceramic stirring grinding mixer, a wet pulverizer, or the like can be used. When a metal container is used, the components are preferably mixed without adding metal beads or stirrer chips. On the other hand, when a non-metallic container is used, a dispersion treatment may be performed by adding metallic beads or stirrer chips. Both when a metal container is used and when a non-metallic container is used, it is preferable to mix the components with a stirring blade, a metal propeller, or the like without bringing a stirring device into contact with the container.

Note that when the amount of metal components in the ink decreases, a metal atom or a salt containing a metal atom may be added in the preparation of the pigment dispersion or in the preparation of the ink. Furthermore, when the pigment dispersion is prepared in a metal container in such a manner that a stirring device does not contact the container, the amount of metal components in the ink can be increased by increasing the stirring time. Also at this time, it is preferable to adjust the stirring time so that the amount of the metal component in the ink does not become excessive.

### 2. Method for Forming Cured Product

The ink described above can be used for forming a cured product by applying the ink to a base material by an inkjet method and forming a film.

The application of the ink to the base material may be performed by discharging the ink from an inkjet head and landing the ink on the base material.

The ejection method from the inkjet head may be either an on-demand method or a continuous method. The inkjet head of the on-demand system may be of an electromechanical conversion system, such as a single cavity type, a double cavity type, a bender type, a piston type, a share mode type, and a shared wall type. The inkjet head of the on-demand system may be any of electrothermal conversion systems such as a thermal inkjet type and a bubble jet ("bubble jet" is a registered trademark of Canon Inc) type.

These inkjet heads or an image forming apparatus including the inkjet heads may have a configuration in which the ink is circulated inside or outside the inkjet heads.

In addition, the printer for forming the cured product may have a mechanism for stirring the ink for redispersing the phosphorescent pigment inside the inkjet head or in the channel between the main tank and the inkjet head.

The stirring of the ink by the stirring mechanism is preferably performed in a non-metallic container (for example, a container made of plastic such as polypropylene). In addition, when the preparation is performed in a metal container (for example, a stainless steel container such as SUS304), the preparation is preferably performed in such a manner that a stirring device does not come into contact with the container. When a metal container is used, the dispersion treatment is preferably performed without adding metal beads or stirrer chips. On the other hand, when a non-metallic container is used, a dispersion treatment may be performed by adding metallic beads or stirrer chips. Both when a metal container is used and when a non-metallic container is used, it is preferable to perform the dispersion treatment with a stirring blade, a metal propeller, or the like without bringing a stirring device into contact with the container.

For example, the stirring mechanism may have a configuration as shown in the Figure. The stirring mechanism 100 shown in the Figure includes a container 110, a rotating impeller 130 having a plurality of stirring blades 120, an ink introduction port 140, and an ink outlet 150. The stirring blades 120 are arranged so as to protrude radially from the impeller. In addition, each of the stirring blades 120 is curved to be convex in the rotation direction so as to receive the ink introduced from the introduction port 140. The ink circulated from the main tank is introduced into the container 110 from the introduction port 140, and at this time, rotates the impeller 130. The impeller 130 is supported by a rotary shaft 135, and rotates so that the stirring blade 120 does not contact the inner surface of the container 110. By this rotation, the phosphorescent pigment and other solid contents precipitated in the vicinity of the bottom of the container 110 are swirled up in the ink and re-dispersed. Then, the ink in which the phosphorescent pigment is re-dispersed is taken out from the outlet 150 and flows to the inkjet head. Note that the container 110 may have a float 160 for measuring the liquid level position. Furthermore, an ink ejection port 170 may be provided to eject ink and return it to the main tank when the amount of ink becomes excessive. According to such a stirring mechanism 100, the impeller 130 and the stirring blades 120, which are stirring devices, can stir the ink without coming into contact with the container 110.

In some cases, a metal member is used for a channel or an inkjet head of a printer. In addition, a metal electromagnetic valve may be used in the channel. According to the findings of the present inventors, the use of these solvents hardly elutes the metal component and hardly changes the amount of the metal component in the ink.

The type of the base material is not particularly limited, and examples thereof include paper, resin films, ABS resin plates, acrylic resin plates, aluminum plates, glass plates, polycarbonate plates, and fabric. The shape of the base material is not particularly limited, and may be various three dimensional shapes in addition to a plate shape, a film shape, and a sheet shape. In addition, the composition may be applied to the space formed inside the base material by various methods.

The film formation of the ink may be performed by a method corresponding to the type of the ink. For example, when the ink is a polymerizable ink, a cured product can be formed by polymerizing and crosslinking the polymerizable compound by irradiation with an active energy ray. Alternatively, when the ink is a solvent-based ink, the organic solvent can be evaporated by heating to form a cured product of the solid component in the ink into a film.

Examples of the active energy rays include electron beams, ultraviolet rays, α-rays, γ-rays, and X-rays. Among these, ultraviolet rays and electron beams are preferable. The ultraviolet rays are preferably light having peak wavelengths in a range of 360 nm to 410 nm inclusive. Furthermore, the ultraviolet rays are preferably emitted from an LED light source. Since an LED has less radiant heat than a conventional light source (e.g., a metal halide lamp), when an LED is used, an ink is less likely to be melted during the irradiation of with the active energy rays, and gloss unevenness and the like are less likely to occur.

When ultraviolet rays are used as the active energy rays, the amount of light per irradiation is preferably 500 mJ/cm² or more and 4000 mJ/cm² or less. When the amount is 500 mJ/cm² or more, the curability of the polymerizable compound can be improved. When the amount is 4000 mJ/cm² or less, discoloration of the cured product can be suppressed.

For forming a cured product having a large thickness, ink application and film formation may be repeatedly performed.

After the cured product is produced in this manner, a protective film may be formed to cover the cured product with a varnish, a laminate film, an ink, or the like, or the cured product may be post-processed into a desired shape.

### 3 Others

When the produced ink is stirred during storage or the like, the stirring is preferably performed in a non-metallic container (for example, a container made of plastic such as polypropylene). In addition, when the preparation is performed in a metal container (for example, a stainless steel container such as SUS304), the preparation is preferably performed in such a manner that a stirring device does not come into contact with the container. These stirring methods can be performed in the same manner as the stirring of the ink by the above-described stirring mechanism.

### Examples

Hereinafter, the present invention will be specifically described with reference to Examples, but the scope of the present invention is not limited to the description of Examples.

### 1. Preparation of Material

An inkjet ink was prepared using the following materials.

### 1-1. Organic Solvent

| | |
|---|---|
| Organic solvent 1: | methyl oleate |
| Organic solvent 2: | methyl ethyl ketone |

### 1-2. Polymerizable Compound

| | |
|---|---|
| Monomer 1: | dipropylene glycol diacrylate |
| Monomer 2: | isobornyl acrylate |
| Monomer 3: | benzyl acrylate |
| Monomer 4: | phenol 4EO modified acrylate |
| Monomer 5: | 2-phenoxyethyl acrylate |
| Monomer 6: | bisphenol A-type 4EO modified diacrylate |

### 1-3. Photopolymerization Initiator

| | |
|---|---|
| Initiator 1: | Omnirad MBF, manifactured by IGM RESINS BV |
| Initiator 2: | Omnirad 754, manifactured by IGM RESINS BV |
| Initiator 3: | Omnirad 819, manifactured by IGM RESINS BV |

### 1-4. Silica Particles or Silicone Resin Particles (Fine Particles)

Silica 1: QSG-170 (average particle diameter: 170 nm), hydrophobicity 67%, manifactured by Shin-Etsu Chemical Co., Ltd.
Silica 2: QSG-100 (average particle diameter: 110 nm), hydrophobicity 67%, manufactured by Shin-Etsu Chemical Co., Ltd.
Silica 3: REOLOSIL DM-10 (average particle diameter: 15 nm), manufactured by Tokuyama Corporation ("REOLOSIL" is a registered trade mark of the company)
Silica 4: Sanseal SP-03P (average particle diameter: 300 nm), manufactured by Tokuyama Corporation ("Sanseal" is a registered trade mark of the company)
Silicone 1: silicone resin particles having a silsesquioxane bond (XC-99-A8808, average particle diameter: 0.7 µm, manufactured by Momentive Performance Materials Inc.).
Silicone 2: silicone resin particles having a silsesquioxane bond (TOSPEARL 130 manufactured by NISSHO SANGYO CO.,Ltd, average particle diameter: 2.0 µm) ("TOSPEARL" is a registered trademark of the company).

### 1-5. Metal Additive

| | |
|---|---|
| Additive 1: | iron octylate (Nikka Octix zinc, manufactured by NIHON KAGAKU SANGYO CO., LTD., "Nikka |
| | Octix" is a registered trademark of the company). |
| Additive 2: | zinc octylate |
| Additive 3: | zinc laurate |

### 1-6. Other Components

Polymerization inhibitor: Irgastab UV-10, manufactured by Basf SE ("Irgastab" is a registered trade mark of the company).

### 2. Preparation of Pigment Dispersion Liquid

### 2-1. Preparation of Dispersion Liquid 1A-1

Into a polypropylene plastic vessel, 50 g of a phosphorescent pigment (manufactured by Nemoto & Co., Ltd., Luminova G-300FF ("Luminova" is a registered trade mark of the company)), 2.5 g of a pigment-dispersing agent (Efka PX4701, manufactured by Basf SE, ("Efka" is a registered trade mark of the company)), and 50 g of organic solvent 1 were placed. To the mixture, 200 g of zirconia beads having an average particle diameter of 0.3 mm, and the mixture was dispersed for 3 hours using a paint shaker to obtain dispersion liquid 1A-1.

### 2-2. Preparation of Dispersion Liquid 1A-2

A dispersion liquid 1A-2 was obtained in the same manner as in the preparation of the dispersion liquid 1A-1 except that the solvent 2 was used instead of the solvent 1.

### 2-3. Preparation of Dispersion Liquid 1B

The dispersion liquid 1B was obtained in the same manner as in the preparation of the dispersion liquid 1A-1 except that monomer 1 was used instead of organic solvent 1.

### 2-4. Preparation of Dispersion Liquid 1C

50 g of a phosphorescent pigment (Luminova G-300FF, manufactured by Nemoto & Co., Ltd), 2.5 g of a pigment-dispersing agent (Efka PX4701, manufactured by Basf SE), and 50 g of monomer 1 were placed in a homogenizer, and the phosphorescent pigment was disintegrated to obtain a dispersion liquid 1C.

### 2-5. Preparation of Dispersion Liquid 1D

A ceramic stirring grinding mixer (stirring grinding mixer D18S manufactured by Ishikawa Plant Co., Ltd) was charged with 50 g of a phosphorescent pigment (Luminova G-300FF manufactured by Nemoto & Co., Ltd), 2.5 g of a pigment-dispersing agent (Efka PX4701 manufactured by Basf SE), and 50 g of monomer 1, and the mixture was ground for 3 hours to obtain a dispersion liquid 1D.

### 2-6. Preparation of Dispersion Liquid 1E

A wet pulverizer (G-smasher, manufactured by RIX CORPORATION) was charged with 50 g of a phosphorescent pigment (Luminova G-300FF, manufactured by Nemoto & Co., Ltd), 2.5 g of a pigment-dispersing agent (Efka PX4701 manufactured by Basf SE), and 50 g of monomer 1. Next, the phosphorescent pigment was disintegrated to obtain a dispersion liquid 1E.

### 2-7. Preparation of Dispersion Liquid 1F

50 g of a phosphorescent pigment (Luminova G-300FF, manufactured by Nemoto & Co., Ltd.), 2.5 g of a pigment-dispersing agent (Efka PX4701, manufactured by Basf SE), and 50 g of monomer 1 were placed in a bead mill (Labstar Mini, manufactured by Ashizawa Finetech Co., Ltd.), and 300 g of zirconia beads with an average particle diameter of 0.3 mm were added. The mixture was dispersed for 3 hours at a circumferential speed of 4 m/s to obtain a dispersion liquid 1F.

### 2-8. Preparation of Dispersion Liquid 2B

A plastic vessel made of polypropylene was charged with 50 g of a cyan pigment (manufactured by Dainichiseika Color & Chemicals Mfg. Co., Ltd., Chromofine Blue 6332JC )), 2. 5 g of a pigment-dispersing agent (manufactured by Basf SE, Efka PX4701), and 50 g of monomer 1. Next, 200 g of zirconia beads having an average particle diameter of 0.3 mm was added, and the mixture was dispersed for 3 hours with a paint shaker to obtain a dispersion liquid 2B.

### 2-9. Preparation of Dispersion Liquid 2D

A ceramic stirring grinding mixer (stirring grinding mixer D18S, manufactured by Ishikawa Plant Co., Ltd) was charged with 200 g of a phosphorescent pigment (LUMINOVA G-Pigment, manufactured by Nemoto & 300FF Co., Ltd), 2.5 g of a pigment-dispersing agent (Efka PX4701, a product of Basf SE), and 50 g of monomer 1. Then, the mixture was ground for 3 hours to obtain a dispersion liquid 2D.

### 3. Preparation of Inkjet Ink

The materials and the pigment dispersion liquids described above were blended in the ratios described in the tables, and inkjet inks were prepared by any of the following production methods.

### (Production Method A60)

Each material and a corresponding pigment dispersion liquid were put into a plastic container made of polypropylene, and stirred for 60 minutes by using a stirrer chip to obtain an inkjet ink.

### (Production Method B60)

Each material and a corresponding pigment dispersion liquid were put into a stainless steel container made of SUS304, and stirred for 60 minutes using a metal propeller to obtain an inkjet ink.

### (Production Method B180)

Each material and a corresponding pigment dispersion liquid were put into a stainless steel vessel manufactured by SUS304, and stirred for 180 minutes using a metallic propeller to obtain an inkjet ink.

### (Production Method C60)

Each material and a corresponding pigment dispersion liquid were put into a stainless steel container made of SUS304, and the mixture was stirred for 60 minutes using a stirrer chip to obtain an inkjet ink.

### (Production Method C1)

Each material and a corresponding pigment dispersion liquid were put into a stainless steel vessel made by SUS304 Co., Ltd, and stirred for 1 minute using a stirring chip to obtain an inkjet ink. Since each material was not sufficiently dissolved and dispersed by this method, the treatment by any of Production Method A60, Production Method B60, and Production Method B180 was continuously performed after the stirring.

### 4. Image Formation

Using each ink, an image was formed by any one of the following production methods.

### (Image Forming Method P1)

Each ink was charged into an inkjet printer having a main ink tank made of a metal container, and the ink in the main ink tank was stirred for 1 hour by a stirring mechanism having a constitution shown in the Figure in order to prevent pigment sedimentation. Thereafter, the ink was fed and ejected from a shear mode inkjet head to form an image on the base material.

### (Image Forming Method P2)

An image was formed in the same manner as in the image forming method P1 except that an electromagnetic valve made of SUS304 was disposed in the liquid contact portion to contact the ink.

### (Image Forming Method P3)

An image was formed in the same manner as in the image forming method P1 except that the ink was stirred with a stirring chip in the ink tank.

### 5. Evaluation

### 5-1. Amount of Metal Element

The ink discharged from the inkjet head at the time of image formation was collected and centrifuged at a 15000rpm for 10 minutes to precipitate solid components such as a phosphorescent pigment, and then the amount of metal elements in the supernatant liquid was measured. The supernatant liquid was subjected to acid decomposition in a sealed microwave decomposition apparatus, and the decomposition liquid was appropriately diluted, followed by measurement using ICP-AES, ICP-MS, or the like according to the concentration of each element contained. Quantification was performed using a calibration curve prepared using various standard substances. As the ICP-AES, SPS3520UV manufactured by SII NanoTechnology Inc. was used. As the ICP-MS, SPQ9700 manufactured by SII Nano Technology Inc. was used. Based on the total amount of the measured metal elements, evaluation was made according to the following criteria.

### (Total Amount of Fe, Cr, Ni, Cu, and Zn)

A: The total amount of these metal elements was 0.2 mg/kg or more and 400 mg/kg or less.
B: The total amount of these metal elements was 0.15 mg/kg or more and 700 mg/kg or less.
C: The total amount of these metal elements was 0.1 mg/kg or more and 1000 mg/kg or less.
D: The total amount of these metal elements was less than 0.1 mg/kg or more than 1000 mg/kg.

### 5-2. Storage stability

After each ink was allowed to stand at a high temperature of 85°C for 2 weeks, the viscosity at 25°C was measured to evaluate the viscosity fluctuation before and after the storage. The viscosity of each ink heated to 25°C was measured at a shear rate of 1000/sec using a rheometer (stress control type rheometer PhysicaMCR manufactured by Anton Paar GmbH, with a cone plate having a 75 mm and a cone angle of 1.0°).
A: The viscosity fluctuation before and after the storage was less than Δ0. 5 mPa·s.
B: The viscosity fluctuation before and after the storage was Δ0. 5 mPa·s or more and less than 1.0 mPa·s.
C: The viscosity fluctuation before and after the storage was Δ1. 0 mPa·s or more and less than 2.0 mPa·s.
D: The viscosity fluctuation before and after the storage was Δ2.0 mPa·s or more.

### 5-3. Defective Nozzle

Using a printer equipped with a piezo-type inkjet head (KM1024iLHE -30, manufactured by Konica Minolta Inc), the ink was continuously ejected (driven) using the piezo-head under conditions of a droplet amount of 30pL, a droplet speed of 7 m/s, and an ejection rate of 10kHz, and the ratio of defective nozzles to all nozzles was evaluated for each ink.
A: The defective nozzles were 0% or more and less than 1%
B: The defective nozzles were 1% or more and less than 5%
C: The defective nozzles were 5% or more and less than 10%
D: The defective nozzles were 10% or more

### 5-4. Continuous Injection Stability

Using a printer equipped with a piezo-type inkjet head (KM1024aLHG-RC, manufactured by Konica Minolta, Inc), the ink was continuously ejected (driven) while being circulated under the conditions of a droplet amount of 20pL, a droplet speed of 7 m/s, and an ejection rate of 20kHz, and the number of ejection failure nozzles was counted 10 minutes after the start of driving.
A: The number of nozzles with ejection failure was less than 5 nozzles
B: The number of nozzles with ejection failure was 5 nozzles or more and less than 10 nozzles
C: The number of nozzles with ejection failure was 10 nozzles or more and less than 20 nozzles
D: The number of nozzles with ejection failure was 20 nozzles or more

### 5-5. Weather Resistance

Each ink was applied to a base material of 160 mm x 160 mm ABS plate with a thickness of 2 mm. Then, using a UVLED curing lamp (manufactured by Phoseon Co., Ltd., FireJet FJ100), ultraviolet rays having a wave length of 365 nm, illuminance of 2 W/cm², and a light quantity of 2000 mJ/cm² were irradiated. Thus, the ink was cured to produce a cured product having a film thickness of 300 microns. Weather resistance tests in accordance with JIS: B 7753 2007 were conducted on each cured product. Specifically, a sunshine carbon arc lamp type accelerated weather resistance tester (Sunshine Weather Meter S80, manufactured by Suga Test Instruments Co., Ltd) was used. Next, the base materials having the respective cured products were irradiated with light having an irradiance of 255 W/m² in the wavelength range of 300 nm or more and 700 nm or less for 102 minutes and sprayed with water for 18 minutes continuously for 78 hours.
A: Substantially no color change is observed in the cured film even after the test as compared with before the test
B: Slight change in color of cured film is observed after the test compared with before the test

### 5-6. Luminance

The luminance of each of the cured products prepared during the evaluation of weather resistance was measured according to phosphorescence luminance measurement method conforming to JIS Z9107A: 2008. To be specific, a printed material having a cured product formed using each ink was stored in a dark room for 48 hours or more, and then the cured product was irradiated with light using a commercial light-source fluorescent lamp D₆₅ in an illumination 200 lx for 20 minutes. 20 minutes after the stop of the light irradiation, the afterglow luminance was measured using a luminance meter (manufactured by Konica Minolta Inc., LS110). Based on the measured luminance values, luminance evaluation was performed according to the following criteria.
A: 150 mcd/m² or more
B: 100 mcd/m² or more and less than 150 mcd/m²
C: 50 mcd/m² or more and less than 100 mcd/m²
D: less than 50 mcd/m²

### 5-7. Viscosity at 25°C

The viscosity of each ink heated to 25°C was measured at a shear rate of 1000/sec using a rheometer (stress control type rheometer PhysicaMCR manufactured by Anton Paar GmbH, with a cone plate having a 75 mm and a cone angle of 1.0°).
A: Viscosity was 5 mPa·s or more and 200 mPa·s or less
B: Viscosity was higher than 200 mPa·s

### 6. Results

### 6-1. Composition and Evaluation of Solvent-based Ink

Inkjet inks were prepared with the compositions described in Table 1 and evaluated. The methods for producing the inkjet inks and the evaluation results are presented in Tables 2 to 4. Note that the numerical values in Table 1 are parts by mass.

**[Table 1]**

| Ink No. | | 1 | 2 | 3 | 4 | 5 | 6 | 7 | 8 |
|---|---|---|---|---|---|---|---|---|---|
| Organic solvent | Solvent 1 | 59.9 | | 59.4 | 59.4 | 59.4 | 59.4 | 59.4 | 59.4 |
| | Solvent 2 | | 59.9 | | | | | | |
| Fine particles | Silica 1 | | | 0.5 | 0.5 | 0.5 | | | |
| | Silica 2 | | | | | | 0.5 | | |
| | Silica 3 | | | | | | | 0.5 | |
| | Silicone 1 | | | | | | | | 0.5 |
| Metal additive | Additive 1 | 0.08 | 0.08 | 0.08 | 0.08 | 0.08 | 0.08 | 0.08 | 0.08 |
| | Additive 2 | | | | 0.01 | | | | |
| | Additive 3 | | | | | 0.01 | | | |
| Pigment dispersion | Dispersion liquid 1A-1 | 40 | 40 | 40 | 40 | 40 | 40 | 40 | 40 |
| Polymerization inhibitor | | | | | | | | | |
| Total | | 100.0 | 100.0 | 100.0 | 100.0 | 100.0 | 100.0 | 100.0 | 100.0 |

**[Table 2]**

| Ink No | | 1 | 2 | 3 | 4 | 5 | 6 | 7 | 8 |
|---|---|---|---|---|---|---|---|---|---|
| Production method | | A-60 | A-60 | A-60 | A-60 | A-60 | A-60 | A-60 | A-60 |
| Image forming method | | P1 | P1 | P1 | P1 | P1 | P1 | P1 | P1 |
| Evaluation | Amount of Fe + Cr+Ni + Cu + Zn | C | C | C | C | C | C | C | C |
| | Storage stability | C | C | C | C | C | C | C | C |
| | nozzle deficiency | C | C | C | B | B | C | C | C |
| | Continuous injection stability | C | C | B | B | B | B | B | B |
| | Weather resistance | B | B | B | B | B | B | B | B |
| | Luminance | C | C | C | C | C | C | C | C |
| | Viscosity | A | A | A | A | A | A | A | A |
| Remarks | | Example | Example | Example | Example | Example | Example Example | | Example |

**[Table 3]**

| Ink No | | 1 2 | | 3 | 4 | 5 | 6 7 | | 8 |
|---|---|---|---|---|---|---|---|---|---|
| Production method | | B-60 | B-60 | B-60 | B-60 | B-60 | B-60 | B-60 | B-60 |
| Image forming method | | P1 | P1 | P1 | P1 | P1 | P1 | P1 | P1 |
| Evaluation | Amount of Fe+Cr+Ni + Cu + Zn | C | C | C | C | C | C | C | C |
| | Storage stability | C | C | C | C | C | C | C | C |
| | Defective nozzle | C | C | C | B | B | C | C | C |
| | Continuous injection stability | C | C | B | B | B | B | B | B |
| | Weather resistance | B | B | B | B | B | B | B | B |
| | Luminance | C | C | C | C | C | C | C | C |
| | Viscosity | A | A | A | A | A | A | A | A |
| Remarks | | Example | Example | Example | Example | Example | Example | Example | Example |

**[Table 4]**

| Ink No | | 1 | 2 | 3 4 | | 5 | 6 | 7 | 8 |
|---|---|---|---|---|---|---|---|---|---|
| Production method | | C-60 | C-60 | C-60 | C-60 | C-60 | C-60 | C-60 | C-60 |
| Image forming method | | P1 | P1 | P1 | P1 | P1 | P1 | P1 | P1 |
| Evaluation | Amount of Fe+Cr+Ni + Cu + Zn | D | D | D | D | D | D | D | D |
| | Storage stability | D | D | D | D | D | D | D | D |
| | Defective nozzle | D | D | D | D | D | D | D | D |
| | Continuous injection stability | D | D | D | D | D | D | D | D |
| | Weather resistance | B | B | B | B | B | B | B | B |
| | Luminance | D | D | D | D | D | D | D | D |
| | Viscosity | A | A | A | A | A | A | A | A |
| Remarks | | Comp. example | Comp. example | Comp. example | Comp. example | Comp. example | Comp. example | Comp. example | Comp. example |

### 6-2. Composition and Evaluation of Active Ray-curable Ink 1

An inkjet ink was prepared with the composition described in Table 5 and evaluated. The methods for producing the inkjet inks and the evaluation results are presented in Tables 6 to 8. Note that the numerical values in Table 5 are parts by mass.

**[Table 5]**

| Ink No. | | 9 | 10 | 11 | 12 | 13 | 14 | 15 | 16 | 17 |
|---|---|---|---|---|---|---|---|---|---|---|
| Monomer | Monomer 1 | 25.91 | 25.90 | 25.90 | 25.41 | 25.41 | 25.41 | 25.41 | 25.41 | 25.41 |
| | Monomer 2 | 30.00 | 30.00 | 30.00 | 30.00 | 30.00 | 30.00 | 30.00 | 30.00 | 30.00 |
| Initiator | Initiator 3 | 4 | 4 | 4 | 4 | 4 | 4 | 4 | 4 | 4 |
| Fine particles | Silica 1 | | | | 0.5 | | | | | |
| | Silica 2 | | | | | 0.5 | | | | |
| | Silica 3 | | | | | | 0.5 | | | |
| | Silica 4 | | | | | | | 0.5 | | |
| | Silicone 1 | | | | | | | | 0.5 | |
| | Silicone 2 | | | | | | | | | 0.5 |
| Additive | Additive 1 | 0.08 | 0.08 | 0.08 | 0.08 | 0.08 | 0.08 | 0.08 | 0.08 | 0.08 |
| | Additive 2 | | 0.01 | | | | | | | |
| | Additive 3 | | | 0.01 | | | | | | |
| Pigment dispersion | Dispersion liquid 1B | 40 | 40 | 40 | 40 | 40 | 40 | 40 | 40 | 40 |
| Polymerization inhibitor | | 0.01 | 0.01 | 0.01 | 0.01 | 0.01 | 0.01 | 0.01 | 0.01 | 0.01 |
| Total | | 100.0 | 100.0 | 100.0 | 100.0 | 100.0 | 100.0 | 100.0 | 100.0 | 100.0 |

**[Table 6]**

| Ink No | | 9 | 10 | 11 | 12 | 13 | 14 | 15 | 16 | 17 |
|---|---|---|---|---|---|---|---|---|---|---|
| Production method | | A-60 | A-60 | A-60 | A-60 | A-60 | A-60 | A-60 | A-60 | A-60 |
| Image forming method | | P1 | P1 | P1 | P1 | P1 | P1 | P1 | P1 | P1 |
| Evaluation | Amount of Fe+Cr+Ni + Cu + Zn | C | C | C | C | C | C | C | C | C |
| | Storage stability | C | C | C | C | C | C | C | C | C |
| | Defective nozzle | C | B | B | C | C | C | C | C | C |
| | Continuous injection stability | C | C | C | B | B | B | B | B | B |
| | Weather resistance | A | A | A | A | A | A | A | A | A |
| | Luminance | C | C | C | C | C | C | C | C | C |
| | Viscosity | A | A | A | A | A | A | A | A | A |
| Remarks | | Example | Example | Example | Example | Example | Example | Example | Example | Example |

**[Table 7]**

| **Ink** No | | 9 | 10 | 11 | 12 | 13 | 14 | 15 | 16 | 17 |
|---|---|---|---|---|---|---|---|---|---|---|
| Production method | | B-60 | B-60 | B-60 | B-60 | B-60 | B-60 | B-60 | B-60 | B-60 |
| Image forming method | | P1 | P1 | P1 | P1 | P1 | P1 | P1 | P1 | P1 |
| Evaluation | Amount of Fe+Cr+Ni + Cu + Zn | C | C | C | C | C | C | C | C | C |
| | Storage stability | C | C | C | C | C | C | C | C | C |
| | Defective nozzle | C | B | B | C | C | C | C | C | C |
| | Continuous injection stability | C | C | C | B | B | B | B | B | B |
| | Weather resistance | A | A | A | A | A | A | A | A | A |
| | Luminance | C | C | C | C | C | C | C | C | C |
| | Viscosity | A | A | A | A | A | A | A | A | A |
| Remarks | | Example | Example | Example | Example | Example | Example | Example | Example | Example |

**[Table 8]**

| Ink No | | 9 | 10 | 11 | 12 | 13 | 14 | 15 | 16 | 17 |
|---|---|---|---|---|---|---|---|---|---|---|
| Production method | | C-60 | C-60 | C-60 | C-60 | C-60 | C-60 | C-60 | C-60 | C-60 |
| Image forming method | | P1 | P1 | P1 | P1 | P1 | P1 | P1 | P1 | P1 |
| Evaluation | Amount of Fe + Cr + Ni + Cu + Zn | D | D | D | D | D | D | D | D | D |
| | Storage stability | D | D | D | D | D | D | D | D | D |
| | Defective nozzle | D | D | D | D | D | D | D | D | D |
| | Continuous injection stability | D | D | D | D | D | D | D | D | D |
| | Weather resistance | A | A | A | A | A | A | A | A | A |
| | Luminance | D | D | D | D | D | D | D | D | D |
| | Viscosity | A | A | A | A | A | A | A | A | A |
| Remarks | | Comp. example | Comp. example | Comp. example | Comp. example | Comp. example | Comp.. example | Comp. example | Comp. example | Comp. example |

### 6-3. Composition and Evaluation of Active Ray-curable Ink 2

Inkjet inks each containing a monofunctional polymerizable compound having an alicyclic structure or an aromatic ring in the compositions shown in Table 9 were prepared and evaluated. The methods for producing the inkjet inks and the evaluation results are presented in Tables 10 to 12. Note that the numerical values in Table 9 are parts by mass. The composition and evaluation of ink 9 are also indicated in each table for comparison.

**[Table 9]**

| Ink No. | | 9 for comparison) | 18 | 19 | 20 | 21 | 22 | 23 | 24 | 25 | 26 |
|---|---|---|---|---|---|---|---|---|---|---|---|
| Monomer | Monomer 1 | 25.98 | 25.91 | 25.91 | 25.91 | 22.91 | 22.91 | 22.91 | 22.91 | 22.91 | 22.91 |
| | Monomer 2 | 30.00 | | | | | | | | | |
| | Monomer 3 | | 30.00 | | | 30.00 | | | 30.00 | | |
| | Monomer 4 | | | 30.00 | | | 30.00 | | | 30.00 | |
| | Monomer 5 | | | | 30.00 | | | 30.00 | | | 30.00 |
| Initiator | Initiator 1 | | | | | 3 | 3 | 3 | 6 | 6 | 6 |
| | Initiator 2 | | | | | 3 | 3 | 3 | | | |
| | Initiator 3 | 4 | 4 | 4 | 4 | 1 | 1 | 1 | 1 | 1 | 1 |
| Additive | Additive 1 | 0.08 | 0.08 | 0.08 | 0.08 | 0.08 | 0.08 | 0.08 | 0.08 | 0.08 | 0.08 |
| Pigment dispersion | Dispersion liquid 1B | 40 | 40 | 40 | 40 | 40 | 40 | 40 | 40 | 40 | 40 |
| Polymerization inhibitor | | 0.01 | 0.01 | 0.01 | 0.01 | 0.01 | 0.01 | 0.01 | 0.01 | 0.01 | 0.01 |
| Total | | 100.0 | 100.0 | 100.0 | 100.0 | 100.0 | 100.0 | 100.0 | 100.0 | 100.0 | 100.0 |

**[Table 10]**

| Ink No | | 9 (for comparison) | 18 | 19 | 20 | 21 | 22 | 23 | 24 | 25 | 26 |
|---|---|---|---|---|---|---|---|---|---|---|---|
| Production method | | A-60 | A-60 | A-60 | A-60 | A-60 | A-60 | A-60 | A-60 | A-60 | A-60 |
| Image forming method | | P1 | P1 | P1 | P1 | P1 | P1 | P1 | P1 | P1 | P1 |
| Evaluation | Amount of Fe + Cr + Ni + Cu + Zn | C | C | C | C | C | C | C | C | C | C |
| | Storage stability | C | B | A | A | B | A | A | B | A | A |
| | Defective nozzle | C | B | B | B | B | B | B | B | B | B |
| | Continuous injection stability | C | C | C | C | C | C | C | C | C | C |
| | Weather resistance | A | A | A | A | A | A | A | A | A | A |
| | Luminance | C | C | C | B | B | B | B | B | B | B |
| | Viscosity | A | A | A | A | A | A | A | A | A | A |
| Remarks | | Ex. | Ex. | Ex. | Ex. | Ex. | Ex. | Ex. | Ex. | Ex. | Ex. |

**[Table 11]**

| Ink No | | 9 (for comparison) | 18 | 19 | 20 | 21 | 22 | 23 | 24 | 25 | 26 |
|---|---|---|---|---|---|---|---|---|---|---|---|
| Production method | | B-60 | B-60 | B-60 | B-60 | B-60 | B-60 | B-60 | B-60 | B-60 | B-60 |
| Image forming method | | P1 | P1 | P1 | P1 | P1 | P1 | P1 | P1 | P1 | P1 |
| Evaluation | Amount of Fe + Cr + Ni + Cu + Zn | C | B | B | B | B | B | B | B | B | B |
| | Storage stability | C | B | A | A | B | A | A | B | A | A |
| | Defective nozzle | C | B | B | B | B | B | B | B | B | B |
| | Continuous injection stability | C | C | C | C | C | C | C | C | C | C |
| | Weather resistance | A | A | A | A | A | A | A | A | A | A |
| | Luminance | C | C | C | B | B | B | B | B | B | B |
| | Viscosity | A | A | A | A | A | A | A | A | A | A |
| Remarks | | Ex. | Ex. | Ex. | Ex. | Ex. | Ex. | Ex. | Ex. | Ex. | Ex. |

**[Table 12]**

| Ink No | | 9 | 18 | 19 | 20 | 21 | 22 | 23 | 24 | 25 | 26 |
|---|---|---|---|---|---|---|---|---|---|---|---|
| Production method | | C-60 | C-60 | C-60 | C-60 | C-60 | C-60 | C-60 | C-60 | C-60 | C-60 |
| Image forming method | | P1 | P1 | P1 | P1 | P1 | P1 | P1 | P1 | P1 | P1 |
| Evaluation | Amount of Fe + Cr + Ni + Cu + Zn | D | D | D | D | D | D | D | D | D | D |
| | Storage stability | D | D | D | D | D | D | D | D | D | D |
| | Defective nozzle | D | D | D | D | D | D | D | D | D | D |
| | Continuous injection stability | D | D | D | D | D | D | D | D | D | D |
| | Weather resistance | A | A | A | A | A | A | A | A | A | A |
| | Luminance | D | D | D | D | D | D | D | D | D | D |
| | Viscosity | A | A | A | A | A | A | A | A | A | A |
| Remarks | | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. |

### 6-4. Composition and Evaluation of Active Ray-curable Ink 3

An inkjet ink was prepared with the composition described in Table 13 without adding a metal additive, and was evaluated. At this time, evaluation was also performed when the method of producing the inkjet ink was changed. The method for producing the inkjet ink and the evaluation results are listed in Table 14. Note that the numerical values in Table 13 are parts by mass. For comparison, the composition and evaluation of Ink 26 are also shown in each table.

**[Table 13]**

| Ink No. | | 26 (for comparison) | 27 | 28 |
|---|---|---|---|---|
| Monomer | Monomer 1 | 22.91 | 22.99 | 22.49 |
| | Monomer 4 | 30.00 | | |
| | Monomer 5 | | 30.00 | 30.00 |
| Initiator | Initiator 1 | 6 | 6 | 6 |
| | Initiator 3 | 1 | 1 | 1 |
| Fine particles | Silica 2 | | | 0.5 |
| Additive | Additive 1 | 0.08 | | |
| Pigment dispersion | Dispersion liquid 1B | 40 | 40 | 40 |
| Polymerization inhibitor | | 0.01 | 0.01 | 0.01 |
| Total | | 100.0 | 100.0 | 100.0 |

**[Table 14]**

| Ink No | | 26 (for comparison) | 27 | 27 | 27 | 27 | 28 |
|---|---|---|---|---|---|---|---|
| Production method | | C-60 | A-60 | B-60 | C-60 | b-180 | b-180 |
| Image forming method | | P1 | P1 | P1 | P1 | P1 | P1 |
| Evaluation | Amount of Fe + Cr + Ni + Cu + Zn | D | D | D | D | C | C |
| | Storage stability | D | D | D | D | A | A |
| | Defective nozzle | D | D | D | D | B | B |
| | Continuous injection stability | D | D | D | D | C | B |
| | Weather resistance | A | A | A | A | A | A |
| | Luminance | D | B | B | D | B | B |
| | Viscosity | A | A | A | A | A | A |
| Remarks | | Comp. Ex. | Comp. Ex. | Comp. Ex. | Comp. Ex. | Example | Example |

### 6-5. Composition and Evaluation of Active Ray-curable Ink 4

Inkjet inks were prepared with the compositions and using different pigment dispersions listed in Table 15, and were evaluated. The method for producing the inkjet ink and the evaluation results are listed in Table 16. Note that the numerical values in Table 16 are parts by mass. For comparison, the composition and evaluation of the ink 28 are also indicated in the tables.

**[Table 15]**

| Ink No | | 28 (for comparison) | 29 | 30 | 31 | 32 | 33 |
|---|---|---|---|---|---|---|---|
| Monomer | Monomer 1 | 22.49 | 22.49 | 22.49 | 22.49 | 22.49 | 22.49 |
| | Monomer 5 | 30.00 | 30.00 | 30.00 | 30.00 | 30.00 | 30.00 |
| Initiator | Initiator 1 | 6 | 6 | 6 | 6 | 6 | 6 |
| | Initiator 3 | 1 | 1 | 1 | 1 | 1 | 1 |
| Fine particles | Silica 2 | 0.5 | 0.5 | 0.5 | 0.5 | 0.5 | 0.5 |
| Pigment dispersion | Dispersion liquid 1B | 40 | | | | | |
| | Dispersion liquid 1C | | 40 | | | | |
| | Dispersion liquid 1D | | | 40 | | | |
| | Dispersion liquid 1E | | | | 40 | | |
| | Dispersion liquid 1F | | | | | 40 | |
| | Dispersion liquid 2D | | | | | | 40 |
| Polymerization inhibitor | | 0.01 | 0.01 | 0.01 | 0.01 | 0.01 | 0.01 |
| Total | | 100.0 | 100.0 | 100.0 | 100.0 | 100.0 | 100.0 |

**[Table 16]**

| Ink No | | 28 (for comparison) | 29 | 30 | 31 | 32 | 33 |
|---|---|---|---|---|---|---|---|
| Production method | | B-180 | B-180 | B-180 | B-180 | B-180 | B-180 |
| Image forming method | | P1 | P1 | P1 | P1 | P1 | P1 |
| Evaluation | Amount of Fe + Cr + Ni + Cu + Zn | C | C | A | C | D | A |
| | Storage stability | A | A | A | A | D | A |
| | Defective nozzle | B | B | A | B | D | A |
| | Continuous injection stability | B | B | A | B | D | A |
| | Weather resistance | A | A | A | A | A | A |
| | Luminance | B | B | B | B | D | A |
| | Viscosity | A | A | A | A | A | A |
| Remarks | | Example | Example | Example | Example | Comparative example | Example |

### 6-6. Composition and Evaluation of Active Ray-curable Ink 5

Ink 30 and ink 9 (the compositions are shown again in Table 17) were used, and evaluation was performed by changing the image forming method. The method for producing the inkjet ink and the evaluation results are presented in Table 18. Note that the numerical values in Table 17 are parts by mass. The composition and evaluation of ink 30 are also described in each table for comparison.

**[Table 17]**

| **Ink** No. | | 30 (Listed again) | 9 (Listed again) |
|---|---|---|---|
| Monomer | Monomer 1 | 22.49 | 25.91 |
| | Monomer 2 | | 30.00 |
| | Monomer 5 | 30.00 | |
| Initiator | Initiator 1 | 6 | |
| | Initiator 3 | 1 | 4 |
| Fine particles | Silica 2 | 0.5 | |
| Additive | Additive 1 | | 0.08 |
| Pigment dispersion | Dispersion liquid 1B | | 40 |
| | Dispersion liquid 1D | 40 | |
| Polymerization inhibitor | | 0.01 | 0.01 |
| Total | | 100.0 | 100.0 |

**[Table 18]**

| Ink No | | 30 (for comparison) | 9 | 30 | 9 | 30 | 9 |
|---|---|---|---|---|---|---|---|
| Production method | | B-180 | B-180 | B-180 | B-180 | B-180 | B-180 |
| Image forming method | | P1 | P1 | P2 | P2 | P3 | P3 |
| Evaluatio n | Amount of Fe + Cr + Ni + Cu + Zn * 1 | A | C | A | C | D | C |
| | Fe+Cr+Ni Amount of + Cu + Zn * 2 | A | C | A | C | D | D |
| | Storage stability | A | A | A | A | D | D |
| | Defective nozzle | A | C | A | C | D | D |
| | Continuous injection stability | A | C | A | C | D | D |
| | Weather resistance | A | A | A | A | A | A |
| | Luminance | B | C | B | C | D | D |
| | Viscosity | A | A | A | A | A | A |
| Remarks | | Example | Example | Example | Example | Comparative example | Comparative example |

| | | | | | | | |
|---|---|---|---|---|---|---|---|
| * 1: Amount of element measured for ink before charged into image forming apparatus * 2: Amount of element measured by collecting ink ejected from nozzle | | | | | | | |

In general, the discharged ink is not collected and stored, and thus the storage stability is evaluated before the ink is mounted in a printer. Therefore, the evaluation of the storage stability in Table 18 was not changed by the image forming method.

### 6-7. Composition and Evaluation of Active Ray-curable Ink 6

Inkjet inks were prepared with the compositions described in Table 19 and Table 20 and with the amounts of metal elements added varied, and evaluation was performed. In addition, at this time, inkjet inks were prepared by changing the method of preparing the ink and evaluated. The methods for producing the inkjet inks and the evaluation results are presented in Tables 21 to 23. Note that the numerical values in Table 19 and Table 20 are parts by mass.

**[Table 19]**

| Ink No. | | 9 (for comparison) | 34 | 35 | 36 | 37 | 38 | 39 | 40 | 41 | 42 | 43 |
|---|---|---|---|---|---|---|---|---|---|---|---|---|
| Monomer | Monomer 1 | 25.98 | 25.99 | 25.99 | 25.99 | 25.99 | 25.99 | 25.99 | 25.98 | 25.94 | 25.89 | 25.79 |
| | Monomer 2 | 30.00 | 30.00 | 30.00 | 30.00 | 30.00 | 30.00 | 30.00 | 30.00 | 30.00 | 30.00 | 30.00 |
| | Monomer 4 | | | | | | | | | | | |
| | Monomer 5 | | | | | | | | | | | |
| Initiator | Initiator 3 | 4 | 4 | 4 | 4 | 4 | 4 | 4 | 4 | 4 | 4 | 4 |
| Fine particles | Silica 1 | | | | | | | | | | | |
| Additive | Additive 1 | 0.08 | | 0.000001 | 0.00001 | 0.00005 | 0.0001 | 0.001 | 0.01 | 0.05 | 0.1 | 0.2 |
| | Additive 2 | | | | | | | | | | | |
| | Additive 3 | | | | | | | | | | | |
| Pigment dispersion | Dispersion liquid 1B | 40 | 40 | 40 | 40 | 40 | 40 | 40 | 40 | 40 | 40 | 40 |
| Polymerization inhibitor | | 0.01 | 0.01 | 0.01 | 0.01 | 0.01 | 0.01 | 0.01 | 0.01 | 0.01 | 0.01 | 0.01 |
| Total | | 100 | 100 | 100 | 100 | 100.0 | 100.0 | 100.0 | 100.0 | 100.0 | 100.0 | 100.0 |

**[Table 20]**

| Ink No. | | 44 | 45 | 46 | 47 |
|---|---|---|---|---|---|
| Monomer | Monomer 1 | 25.99 | 25.99 | 25.99 | 25.49 |
| | Monomer 2 | | | | |
| | Monomer 4 | 30.00 | 30.00 | | |
| | Monomer 5 | | | 30.00 | 30.00 |
| Initiator | Initiator 3 | 4 | 4 | 4 | 4 |
| Fine particles | Silica 1 | | | | 0.5 |
| Additive | Additive 1 | 0.00001 | 0.00005 | 0.00005 | 0.00005 |
| | Additive 2 | | | | |
| | Additive 3 | | | | |
| Pigment dispersion | Dispersion liquid 1B | 40 | 40 | 40 | 40 |
| Polymerization inhibitor | | 0.01 | 0.01 | 0.01 | 0.01 |
| Total | | 100.0 | 100.0 | 100.0 | 100.0 |

**[Table 21]**

| Ink No | | 9 (for comparison) | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|
| Production method | | A-60 | A-60 | A-60 | A-60 | A-60 | A-60 | A-60 | A-60 | A-60 | A-60 | A-60 | A-60 | A-60 | A-60 | A-60 |
| Image forming method | | P1 | P1 | P1 | P1 | P1 | P1 | P1 | P1 | P1 | P1 | P1 | P1 | P1 | P1 | P1 |
| Evaluation | Amount of Fe + Cr + Ni + Cu + Zn | C | D | D | C | A | A | A | A | B | C | D | C | A | A | A |
| | Storage stability | C | D | D | C | B | B | B | B | B | C | D | B | A | A | A |
| | Defective nozzle | C | D | D | C | B | B | B | B | C | C | D | B | A | A | A |
| | Continuous injection stability | C | D | D | C | C | C | C | C | C | C | D | C | C | C | B |
| | Weather resistance | A | A | A | A | A | A | A | A | A | A | A | A | A | A | A |
| | Luminance | C | C | C | C | C | C | C | C | C | C | D | B | B | B | B |
| | Viscosity | A | A | A | A | A | A | A | A | A | A | A | A | A | A | A |
| Remarks | | Ex. | Comp. Ex. | Comp. Ex. | Ex. | Ex. | Ex. | Ex. | Ex. | Ex. | Ex. | Comp. Ex. | Ex. | Ex. | Ex. | Ex. |

**[Table 22]**

| Ink No | | 9 (for comparison) | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|
| Production method | | B-60 | B-60 | B-60 | B-60 | B-60 | B-60 | B-60 | B-60 | B-60 | B-60 | B-60 | B-60 | B-60 | B-60 | B-60 |
| Image forming method | | P1 | P1 | P1 | P1 | P1 | P1 | P1 | P1 | P1 | P1 | P1 | P1 | P1 | P1 | P1 |
| Evaluation | Amount of Fe + Cr + Ni + Cu + Zn | C | D | D | C | A | A | A | A | B | C | D | C | A | A | A |
| | Storage stability | C | D | D | C | B | B | B | B | B | C | D | B | A | A | A |
| | Defective nozzle | C | D | D | C | B | B | B | B | C | C | D | B | A | A | A |
| | Continuous injection stability | C | D | D | C | C | C | C | C | C | C | D | C | C | C | B |
| | Weather resistance | A | A | A | A | A | A | A | A | A | A | A | A | A | A | A |
| | Luminance | C | C | C | C | C | C | C | C | C | C | D | B | B | B | B |
| | Viscosity | A | A | A | A | A | A | A | A | A | A | A | A | A | A | A |
| Remarks | | Ex. | Comp. Ex. | Comp. Ex. | Ex. | Ex. | Ex. | Ex. | Ex. | Ex. | Ex. | Comp. Ex. | Ex. | Ex. | Ex. | Ex. |

**[Table 23]**

| Ink No | | 9 (for comparison) | 34 | 35 | 1 36 | 37 | 38 | 39 | 40 | 41 | 42 | 43 | 44 | 45 | 46 | 47 |
|---|---|---|---|---|---|---|---|---|---|---|---|---|---|---|---|---|
| Production method | | C-60 | C-60 | C-60 | C-60 | C-60 | C-60 | C-60 | C-60 | C-60 | C-60 | C-60 | C-60 | C-60 | C-60 | C-60 |
| Image forming method | | P1 | P1 | P1 | P1 | P1 | P1 | P1 | P1 | P1 | P1 | P1 | P1 | P1 | P1 | P1 |
| Evaluation | Amount of Fe + Cr + Ni + Cu + Zn | D | D | D | D | D | D | D | D | D | D | D | D | D | D | D |
| | Storage stability | D | D | D | D | D | D | D | D | D | D | D | D | D | D | D |
| | Defective nozzle | D | D | D | D | D | D | D | D | D | D | D | D | D | D | D |
| | Continuous injection stability | D | D | D | D | D | D | D | D | D | D | D | D | D | D | D |
| | Weather resistance | A | A | A | A | A | A | A | A | A | A | A | A | A | A | A |
| | Luminance | D | D | D | D | D | D | D | D | D | D | D | D | D | D | D |
| | Viscosity | A | A | A | A | A | A | A | A | A | A | A | A | A | A | A |
| Remarks | | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. | Comp. Ex. |

### 6-8. Composition and Evaluation of Active Ray-curable Ink 7

Inks were prepared with the compositions listed in Table 24 and evaluated. The methods for producing the inks and the evaluation results are shown in Table 25. Note that the numerical values in Table 24 are parts by mass.

**[Table 24]**

| Ink No. | | 48 | 49 | 50 | 51 | 52 | 53 | 54 | 55 |
|---|---|---|---|---|---|---|---|---|---|
| Monomer | Monomer 1 | 25.99 | 25.99 | 25.99 | 25.94 | 25.89 | 25.79 | | |
| | Monomer 2 | 30.00 | 30.00 | 30.00 | 30.00 | 30.00 | 30.00 | 30.00 | 5.00 |
| | Monomer 6 | | | | | | | 25.79 | |
| Initiator | Initiator 3 | 4 | 4 | 4 | 4 | 4 | 4 | 4 | 4 |
| Additive | Additive 1 | | 0.00001 | 0.0001 | 0.05 | 0.1 | 0.2 | 0.001 | 0.001 |
| Pigment dispersion | Dispersion liquid 1B | | | | | | | 40 | 90.989 |
| | Dispersion liquid 2B | 40 | 40 | 40 | 40 | 40 | 40 | | |
| Polymerization inhibitor | | 0.01 | 0.01 | 0.01 | 0.01 | 0.01 | 0.01 | 0.01 | 0.01 |
| Total | | 100.0 | 100.0 | 100.0 | 100.0 | 100.0 | 100.0 | 99.8 | 100.0 |

**[Table 25]**

| Ink No | | 48 | 49 | 50 | 51 | 52 | 53 | 54 | 55 |
|---|---|---|---|---|---|---|---|---|---|
| Production method | | A-60 | A-60 | A-60 | A-60 | A-60 | A-60 | A-60 | A-60 |
| Image forming method | | P1 | P1 | P1 | P1 | P1 | P1 | P1 | P1 |
| Evaluation | Amount of Fe + Cr + Ni + Cu + Zn | D | D | C | C | C | D | D | D |
| | Storage stability | C | C | C | C | C | C | D | D |
| | Defective nozzle | C | C | C | C | C | C | D | D |
| | Continuous injection stability | C | C | C | C | C | C | D | D |
| | Weather resistance | A | A | A | A | A | A | A | A |
| | Luminance | D | D | D | D | D | D | C | B |
| | Viscosity | A | A | A | A | A | A | B | B |
| Remarks | | Comp. Ex. | Comp. Ex. | Comp. Ex. | Comp. Ex. | Comp. Ex. | Comp. Ex. | Comp. Ex. | Comp. Ex. |

As is clear from Table 1 to Table 25, by adjusting the amount of the metal component in the ink to an appropriate range, the storage stability of the ink and the ejectability from an inkjet head (and the ejectability during continuous ejection) can be improved, and a cured product having sufficiently high luminance can be formed.

### Industrial Applicability

According to the present invention, an inkjet ink containing a phosphorescent pigment can be more easily used. Therefore, the present invention is expected to further broaden the applications to which an inkjet ink containing a phosphorescent pigment can be applied, and contribute to further development in this field.

Although embodiments of the present invention have been described and illustrated in detail, it is clearly understood that the same is by way of illustration and example only and not limitation, the scope of the present invention should be interpreted by terms of the appended claims.

## Claims

1. An inkjet ink comprising a phosphorescent pigment, wherein
a content of the phosphorescent pigment is 10% by mass or more and 70% by mass or less based on a total mass of the inkjet ink;
viscosity of the inkjet ink at 25°C is 5 mPa·s or more and 200 mPa·s or less; and
a total amount of Fe, Cr, Ni, Cu, and Zn contained in a supernatant liquid of the inkjet ink is 0.1 mg/kg or more and 1000 mg/kg or less.

2. The inkjet ink according to claim 1, wherein
the total amount of Fe, Cr, Ni, Cu and Zn contained in the supernatant liquid is 0.15 mg/kg or more and 700 mg/kg or less.

3. The inkjet ink according to claim 1 or 2, further comprising:
a silica particle or a silicone resin particle.

4. The inkjet ink according to claim 3, wherein
a content of the silica particle and the silicone resin particle is 0.01% by mass or more and 1.0% by mass or less based on the total mass of the inkjet ink.

5. The inkjet ink according to any one of claims 1 to 4, further comprising:
an organic solvent.

6. The inkjet ink according to any one of claims 1 to 4, further comprising:
a polymerizable compound, wherein the inkjet ink is cured by irradiation with an active ray.

7. The inkjet ink according to claim 6, further comprising:
an (meth)acrylate.

8. The inkjet ink according to claim 6 or 7, further comprising:
a monofunctional polymerizable compound having an aromatic ring.

9. The inkjet ink according to any one of claims 6 to 8, further comprising:
a phenylglyoxylic acid ester-based polymerization initiator.

## Patentansprüche

1. Eine Tintenstrahltinte, die ein phosphoreszierendes Pigment enthält, wobei
der Gehalt an phosphoreszierendem Pigment 10 Massenprozent oder mehr und 70 Massenprozent oder weniger, bezogen auf die Gesamtmasse der Tintenstrahltinte, beträgt;
die Viskosität der Tintenstrahltinte bei 25 °C 5 mPa·s oder mehr und 200 mPa·s oder weniger beträgt; und
die Gesamtmenge an Fe, Cr, Ni, Cu und Zn, die in einer Überstandsflüssigkeit der Tintenstrahltinte enthalten ist, 0,1 mg/kg oder mehr und 1000 mg/kg oder weniger beträgt.

2. Die Tintenstrahltinte nach Anspruch 1, wobei
die Gesamtmenge an Fe, Cr, Ni, Cu und Zn, die in der Überstandsflüssigkeit enthalten ist, 0,15 mg/kg oder mehr und 700 mg/kg oder weniger beträgt.

3. Die Tintenstrahltinte nach Anspruch 1 oder 2, die ferner umfasst:
ein Siliziumdioxidpartikel oder ein Silikonharzpartikel.

4. Die Tintenstrahltinte nach Anspruch 3, wobei
der Gehalt an Siliziumdioxidpartikeln und Silikonharzpartikeln 0,01 Massenprozent oder mehr und 1,0 Massenprozent oder weniger, bezogen auf die Gesamtmasse der Tintenstrahltinte, beträgt.

5. Die Tintenstrahltinte gemäß einem der Ansprüche 1 bis 4, die ferner umfasst:
ein organisches Lösungsmittel.

6. Die Tintenstrahltinte gemäß einem der Ansprüche 1 bis 4, die ferner umfasst:
eine polymerisierbare Verbindung, wobei die Tintenstrahltinte durch Bestrahlung mit aktiver Strahlung ausgehärtet wird.

7. Die Tintenstrahltinte gemäß Anspruch 6, die ferner umfasst:
ein (Meth)acrylat.

8. Die Tintenstrahltinte nach Anspruch 6 oder 7, die ferner umfasst:
eine monofunktionelle polymerisierbare Verbindung mit einem aromatischen Ring.

9. Die Tintenstrahltinte nach einem der Ansprüche 6 bis 8, die ferner umfasst:
einen Polymerisationsinitiator auf Basis eines Phenylglyoxylsäureesters.

## Revendications

1. Une encre jet d'encre comprenant un pigment phosphorescent, dans laquelle
une teneur en pigment phosphorescent est de 10 % en masse ou plus, et de 70 % en masse ou moins, sur la base de la masse totale de l'encre jet d'encre ;
viscosité de l'encre jet d'encre à 25 °C est de 5 mPa·s ou plus et 200 mPa·s ou moins ; et
une quantité totale de Fe, Cr, Ni, Cu et Zn contenue dans un liquide surnageant de l'encre jet d'encre est de 0,1 mg/kg ou plus et 1000 mg/kg ou moins.

2. L'encre jet d'encre selon la revendication 1, dans laquelle
la quantité totale de Fe, Cr, Ni, Cu et Zn contenue dans le liquide surnageant est de 0,15 mg/kg ou plus, et 700 mg/kg ou moins.

3. L'encre jet d'encre selon la revendication 1 ou 2, comprenant en outre :
une particule de silice ou une particule de résine de silicone.

4. L'encre jet d'encre selon la revendication 3, dans laquelle
une teneur en particule de silice et en particule de résine de silicone est de 0,01 % en masse ou plus et de 1,0 % en masse ou moins, sur la base de la masse totale de l'encre jet d'encre.

5. L'encre jet d'encre selon l'une quelconque des revendications 1 à 4, comprenant en outre :
un solvant organique.

6. L'encre jet d'encre selon l'une quelconque des revendications 1 à 4, comprenant en outre :
un composé polymérisable, dans lequel l'encre jet d'encre est durcie par irradiation à l'aide d'un rayon actif.

7. L'encre jet d'encre selon la revendication 6, comprenant en outre :
un (meth)acrylate.

8. L'encre jet d'encre selon la revendication 6 ou 7, comprenant en outre :
un composé polymérisable monofonctionnel ayant un anneau aromatique.

9. L'encre jet d'encre selon l'une quelconque des revendications 6 à 8, comprenant en outre :
un initiateur de polymérisation à base d'ester d'acide phénylglyoxylique.
